(19) Europäisches Patentamt
European Patent Office
Office européen des brevets

(11) **EP 2 157 412 B1**

(12) **EUROPÄISCHE PATENTSCHRIFT**

(45) Veröffentlichungstag und Bekanntmachung des Hinweises auf die Patenterteilung:
**13.01.2016   Patentblatt 2016/02**

(51) Int Cl.:
***G01F 1/84*** *(2006.01)*

(21) Anmeldenummer: **09009977.1**

(22) Anmeldetag: **03.08.2009**

(54) **Verfahren zum Betreiben eines Resonanzmesssystems und Resonanzmesssystem**

Method for operating a resonance measuring system and resonance measuring system

Procédé de fonctionnement d'un système de mesure à résonance et système de mesure à résonance

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.08.2008   DE 102008039012**

(43) Veröffentlichungstag der Anmeldung:
**24.02.2010   Patentblatt 2010/08**

(73) Patentinhaber: **KROHNE MESSTECHNIK GMBH & CO. KG**
**47058 Duisburg (DE)**

(72) Erfinder: **Kolahi, Kourosh Dr.**
**47051 Duisburg (DE)**

(74) Vertreter: **Gesthuysen Patent- und Rechtsanwälte Patentanwälte**
**Huyssenallee 100**
**45128 Essen (DE)**

(56) Entgegenhaltungen:
**WO-A1-98/31990          US-A1- 2003 140 695**
**US-A1- 2008 141 787**

**Beschreibung**

Die Erfindung betrifft ein Verfahren zum Betreiben eines Resonanzmeßsystems, insbesondere eines Coriolis-Massedurchflußmeßgerät, wobei das Resonanzmeßsystem wenigstens ein mit einem Prozeß wechselwirkendes Schwingelement, wenigstens einen Schwingungserzeuger und wenigstens einen Schwingungsaufnehmer umfaßt, wobei das Schwingelement durch den Schwingungserzeuger mit bekannten Anregungssignalen $F_i(t)$ zu Schwingungen in wenigstens einer Eigenform angeregt wird und das Schwingelement durch den Prozeß mit unbekannten Anregungssignalen $W(t)$ zu Schwingungen angeregt wird und die Schwingungen des Schwingelements durch den Schwingungsaufnehmer erfaßt und als wenigstens ein Antwortsignal $y_i(t)$ der jeweiligen Eigenform dargestellt werden. Darüber hinaus betrifft die Erfindung auch ein Resonanzmeßsystem, das mit einem solchen Verfahren betrieben wird.

Resonanzmeßsysteme der vorgenannten Art sind seit vielen Jahren bekannt, nicht nur in Form von Coriolis-Massedurchflußmeßgeräten, sondern auch als Dichtemeßgeräte oder Füllstandwächter nach dem Stimmgabel-Prinzip, als Quarzwaagen und Bandviskosimeter u.a.m. Diese Resonanzmeßsysteme stehen mit einem Prozeß in Verbindung, wobei sich Prozeß und Resonanzmeßsystem wechselseitig beeinflussen. Bei dem beispielhaft genannten Coriolis-Massedurchflußmeßgerät besteht der Prozeß aus einem das Schwingelement - Coriolis-Meßrohr -durchströmendem Medium, wobei die eigentlich maßgeblich interessierende Größe der Massestrom durch das Schwingelement ist. Die Beeinflussung des Prozesses durch das Schwingelement - oder allgemeiner durch das Resonanzmeßsystem - ist meist vernachlässigbar. Die Eigenfrequenzen des Resonanzsystems bzw. Schwingelements sind darüber hinaus von besonderer Bedeutung, weil bevorzugt Arbeitspunkte des Resonanzmeßsystems auf Eigenfrequenzen des Meßrohres gelegt werden, um die erforderlichen Schwingungen für die Induktion der Corioliskräfte mit einem minimalen Energieaufwand einprägen zu können.

Hier und nachfolgend ist von besonderem Interesse, daß bei einem Coriolis-Massedurchflußmeßgerät zudem eine Zusatzinformation, nämlich eine Information über die Dichte des Fluids des strömenden Mediums in den Eigenfrequenzen des Schwingelements verschlüsselt ist.

Im folgenden werden Resonanzmeßsysteme am Beispiel von Coriolis-Massedurchflußmeßgeräten behandelt, was nicht einschränkend zu verstehen ist. Als Resonanzmeßsysteme werden vorliegend ganz allgemein solche Systeme bezeichnet, bei denen Informationen über die zu bestimmenden Prozeßgrößen (Meßgrößen) in den Eigenfrequenzen verschlüsselt sind oder/und solche Systeme, bei denen Arbeitspunkte auf die Eigenfrequenzen des Meßsystems gelegt werden. Auf alle unter diese Definition fallenden Systeme sind die nachfolgenden Ausführungen anwendbar.

Das Schwingelement des Resonanzmeßsystems wird üblicherweise mit einem bekannten Anregungssignal $F_i(t)$ - oder auch mit mehreren bekannten Anregungssignalen $F_i(t)$ - zu Schwingungen in einer Eigenform angeregt. Wie viele Anregungssignale notwendig sind, hängt von der anzuregenden Eigenform ab und von der Anzahl und Verteilung der Schwingungserzeuger über das Schwingelement. Der Einfachheit halber wird im folgenden meist von einem Anregungssignal $F_i(t)$ die Rede sein, es könnte sich immer auch um mehrere Anregungssignale handeln. In diesem Sinne werden die Schwingungen des Schwingelements mit einem oder auch mit mehreren Schwingungsaufnehmern erfaßt, was zu einem Antwortsignal oder auch zu mehreren Antwortsignalen führt; im folgenden ist der Einfachheit halber meist von einem Antwortsignal die Rede, wobei es sich - wie zuvor dargelegt - hier stets immer auch um mehrere Ausgangssignale handeln kann. In beiden Fällen ist dies nicht einschränkend zu verstehen.

Das bekannte Anregungssignal $F_i(t)$ kann insoweit als bekannt bezeichnet werden, als daß es beispielsweise durch eine bestimmungsgemäß eingesetzte Regelung erzeugt wird. Häufig handelt es sich bei diesem Anregungssignal um ein harmonisches Signal, also z. B. um eine sinusförmige Kraftanregung mittels des Schwingungserzeugers. Neben den bekannten eingeprägten Anregungssignalen $F_i(t)$ wirkt der Prozeß auf das Schwingelement ein. Diese Einwirkung erfolgt zum einen über die Änderung der Parameter des Schwingelements (parametrische Anregung) und zum anderen über die Anregung des Schwingelements mit unbekannten Anregungssignalen $W(t)$.

Bekannte Massedurchflußmeßgeräte, die nach dem Coriolis-Prinzip arbeiten, zeichnen sich im einphasigen Strömungsbetrieb - also bei einer Strömung eines physikalisch homogenen Mediums - durch eine hohe Genauigkeit und Zuverlässigkeit aus. Dies gilt jedoch nicht für Mehrphasenströmungen. Eine mehrphasige Strömung ist im allgemeinen Fall eine Strömung, die sich aus mindestens zwei Phasen mit unterschiedlichen physikalischen Eigenschaften zusammensetzt. Die Phasen können dabei entweder aus gleichen oder aus unterschiedlichen Materialien bestehen. Als Phasen werden homogene und räumlich begrenzte Bereiche bezeichnet. Als Beispiel sind Flüssigkeit-Feststoff-Strömungen, Gas-Flüssigkeit-Strömungen, Gas-Feststoff-Strömungen, Wasser-Dampf-Strömungen oder Wasser-Luft-Strömungen zu nennen. Unter mehrphasigen Strömungen werden hier auch Strömungen verstanden, die beispielsweise beim Befüllen, Entleeren, Prozeßanfahren und Schalten von Ventilen auftreten.

Bei Anwendungen mit Mehrphasenströmungen treten erhebliche Meßfehler auf. Die wesentliche Ursache ist dabei das Auftreten einer asymmetrischen Befüllung des Meßrohres beim Fließvorgang, die zur rapiden Fluktuation der Resonanzfrequenz führt, sowie das Auftreten und Aufhören von Sekundärströmungen im Meßrohr, die eine schnelle Dämpfung beim Auftreten und eine rasche Entdämpfung beim Aufhören bewirken. Grundsätzlich werden Sekundärströmungen durch unterschiedliche Dichten der Strömungsphasen hervorgerufen.

Durch schnelle Dämpfung und Entdämpfung des Meßrohres infolge einer instationären Strömung und bei einer gleichzeitigen raschen Änderung der Resonanzfrequenz kommt es bei derzeitig relativ langsamen - bezogen auf die Geschwindigkeit der Instationarität der Strömung - Steuer- und Regelungsverfahren zum Verlust des Arbeitspunktes. Dann reicht häufig auch die maximal verfügbare Leistung nicht aus, um die Schwingungen des Meßrohres aufrechterhalten zu können. Die Folge ist, daß keine Corioliskräfte induziert werden können, womit die Meßbarkeit des Massenstromes verlorengeht. Die Antriebsleistung ist nicht beliebig erhöhbar und ist bei existierenden Resonanzmeßsystemen tatsächlich begrenzt, damit zum einen aus Gründen des Ex-Schutzes nicht zu viel Energie im System gespeichert wird und damit zum anderen im Falle des Aussetzens der Mehrphasenströmung keine ungünstig hohen Schwingungsamplituden auftreten.

Vor allem ist das Einstellen der Arbeitspunkte bei Resonanzmeßsystemen mit schwach gedämpften Eigenformen problematisch, wie z.B. bei vielen Coriolis-Massedurchflußmeßgeräten, bei denen eine Resonanzerhöhung der Meßrohrauslenkung um mehr als drei Größenordnungen vorliegen kann. Dies verdeutlicht, welch hohe Anforderungen an die Adaptivität der Anregungssignale zu stellen sind. Der Verlust des Arbeitspunktes ist mit einem erneuten - teils zeit- und energieaufwendigen - Anfahren eines Resonanzmeßsystems verbunden.

Der Verlust des Resonanz-Arbeitspunktes hat ferner zur Folge, daß die mit der Eigenfrequenz zusammenhängenden interessierenden Prozeßgrößen nicht mehr bekannt sind, so daß auch hier ein weiterer plötzlicher Informationsverlust vorliegt.

Aufgabe der vorliegenden Erfindung ist es, die aufgezeigten Nachteile bei bekannten Verfahren zum Betreiben von Resonanzmeßsystemen - zumindest teilweise - zu vermeiden, insbesondere ein solches Verfahren anzugeben, das eine schnelles Ein- und Nachregeln des Resonanzmeßsystems auf den - zeitvarianten - Resonanz-Arbeitspunkt ermöglicht.

Aus dem Stand der Technik sind diverse Regelungsmechanismen bekannt, die dazu dienen, die Arbeitsfrequenz optimal einzustellen. WO 98/31990 beschreibt ein Coriolis-Durchflußmeßgerät, bei dem das Meßrohr zusätzlich zu einer Anregung bei einer bekannten Frequenz mit einem weiteren Anregungssignal, welches u. a. weißem Rauschen entsprechen kann, beaufschlagt wird. Aus US 2003/0140695 ist ein vibronischer Füllstandsensor mit Breitband-Anregung bekannt, auf die das System wie ein Filter wirkt.

US 2008/0141787 beschreibt ein Coriolis-Durchflußmeßgerät, bei dem die Anregungsfrequenz mit Hilfe der Phasendifferenz zwischen Anregungssignal und Bewegungssignal auf eine Eigenfrequenz geregelt wird.

Das erfindungsgemäße Verfahren zum Betreiben eines Resonanzmeßsystems, bei dem die zuvor hergeleitete und aufgezeigte Aufgabe gelöst ist, ist zunächst und im wesentlichen dadurch gekennzeichnet, daß durch Projektion des Antwortsignals $y_i(t)$ auf ein orthogonales Bezugssystem orthogonale Projektionskomponenten des Antwortsignals erzeugt werden, mit wenigstens einem Teil der Wechselanteile der Projektionskomponenten wenigstens ein erster mit der Eigenfrequenz $f_{0i}$ des Resonanzmeßsystems korrespondierender Wert ermittelt wird und mit wenigstens einem Teil der Gleichanteile der Projektionskomponenten wenigstens ein zweiter mit der Eigenfrequenz $f_{0i}$ des Resonanzmeßsystems korrespondierender Wert ermittelt wird und der erste und der zweite mit der Eigenfrequenz $f_{0i}$ des Resonanzmeßsystems korrespondierende Wert zur Anregung des Resonanzmeßsystems mit mindestens einer Regelung in mindestens einem Regelkreis auf die mit der Eigenfrequenz $f_{0i}$ korrespondierende Eigenform verwendet werden.

Erfindungsgemäß ist also vorgesehen, zur Bestimmung der Eigenfrequenzen bei Resonanzmeßsystemen und zum Einstellen und Nachverfolgen des gegebenenfalls zeitveränderlichen Arbeitspunktes gleichzeitig zwei Informationsquellen bei der Ermittlung der Eigenfrequenz des Resonanzsystems in der jeweiligen Eigenform zu nutzen, wobei ein entscheidender Vorteil darin begründet ist, daß die beiden genutzten Informationsquellen in unterschiedlichen Anregungszuständen der Resonanzmeßsystems unterschiedlich schnell und genau auswertbar sind. Die gleichzeitige Ermittlung zweier Werte für die Eigenfrequenz auf verschiedenen Wegen ermöglicht eine sicherere, schnellere und genauere Bestimmung der Eigenfrequenzen im Vergleich zur Verwendung nur eines der Verfahren für sich alleine. Durch die Projektion des Antwortsignals auf ein orthogonales Bezugssystem ist es sehr einfach möglich, verschiedene Teile des Antwortsignals $y_i(t)$ zu erhalten, wie dies beispielsweise aus der Nachrichtentechnik bei der Erzeugung und Analyse von Quadraturkomponenten bekannt ist. Die ermittelten Werte der Eigenfrequenz können dann in einer beliebigen Regelung zur Anregung des Resonanzmeßsystems auf die interessierende Eigenform genutzt werden.

Nach einer bevorzugten Ausgestaltung der Erfindung wird die Regelung dadurch umgesetzt, daß der erste mit der Eigenfrequenz $f_{0i}$ korrespondierende ermittelte Wert zur Anregung des Resonanzmeßsystems 1 mit einer ersten Regelung in einem ersten Regelkreis auf die korrespondierende Eigenform verwendet wird und der zweite mit der Eigenfrequenz $f_{0i}$ korrespondierende ermittelte Wert zur Anregung des Resonanzmeßsystems mit einer zweiten Regelung in einem zweiten Regelkreis (6) auf die korrespondierende Eigenform verwendet wird. In einer alternativen Ausgestaltung wird die Regelung als Mehrgrößenregelung realisier, bei der keine separaten, entkoppelten Regler bzw. Regelkreise vorliegen.

Erfindungsgemäß ist erkannt worden, daß die Anregung des Resonanzmeßsystems durch das unbekannte Anregungssignal sehr breitbandig erfolgt, nämlich durch das Rauschen des Prozesses; hierbei handelt es sich um eine additive Prozeßanregung. Die unbekannte Anregung schlägt sich im Wechselanteil der Projektionskomponenten des Antwortsignals nieder, wobei das Resonanzmeßsystem aufgrund seiner Resonanzeigenschaften - Bandpaß - hauptsächlich solche Signalkomponenten überträgt, die um seine Eigenfrequenzen liegen, so daß die Eigenfrequenzen direkt als Parameter im Ausgangssignal - bzw. in den Ausgangssignalen - auftreten und aus diesem direkt ohne einen zeitaufwendigen Suchvorgang extrahiert werden können. Bei der Nutzung der Wechselanteile der Projektionskomponenten handelt es sich daher um ein direktes Verfahren, das im gesamten interessierenden Frequenzbereich schnell arbeitet. Die breitbandige - und üblicherweise störende - Anregung des Resonanzmeßsystems durch den Prozeß wird vorliegend also genutzt, um eine Information über die interessierenden - zeitvarianten - Werte für die Eigenfrequenzen zu erhalten.

In den Gleichanteilen der Projektionskomponenten des Antwortsignals $y_i(t)$ schlagen sich vor allem die Teile des Antwortsignals $y_i(t)$ nieder, die durch die Anregung des Resonanzmeßsystems mit bekannten Anregungssignalen $F_i(t)$ verursacht worden sind. In dieser zweiten Regelung wird vor allem von dem Zusammenhang Gebrauch gemacht, daß sich eine bestimmte Antwortphase zwischen dem bekannten Anregungssignal $F_i(t)$ und dem Antwortsignal $y_i(t)$ der jeweiligen Eigenform einstellt. Wenn das Resonanzmeßsystem beispielsweise als ein System zweiter Ordnung aufgefaßt wird, ist bekannt, daß das Antwortsignal und das Anregungssignal eine Phasenverschiebung von insgesamt 180° erfahren, wenn das - harmonische - Anregungssignal den gesamten Frequenzbereich durchläuft. Die Phasenverschiebung zwischen dem bekannten Anregungssignal $F_i(t)$ und dem Antwortsignal $y_i(t)$ gestattet dann indirekt einen Rückschluß auf die Eigenfrequenz des Systems.

Bei Durchführung des Verfahrens wird automatisch der Wert für die Eigenfrequenz $f_{0i}$ der jeweiligen Eigenform des Resonanzmeßsystems ermittelt, bevorzugt wird der Wert für die Eigenfrequenz $f_{0i}$ der jeweiligen Eigenform im ausgeregelten Zustand des Resonanzmeßsystems aus der sich ergebenden Stellgröße des Resonanzmeßsystems ermittelt, insbesondere aus einer fusionierten Stellgröße.

Vorzugsweise wird zur Bestimmung der Eigenfrequenz nach diesem Verfahren das Resonanzmeßsystem mit einem generierten und bekannten Anregungssignal zu erzwungenen Schwingungen angeregt und die Phase zwischen dem bekannten Anregungssignal $F_i(t)$ und dem Antwortsignal $y_i(t)$ auf einen vorbestimmten Wert geregelt, der den Wert der interessierenden Eigenfrequenz der Eigenform charakterisiert. Damit erfolgt die Bestimmung der Eigenfrequenz in einem zweiten geschlossenen Regelkreis. Dieses indirekte Verfahren ist sehr genau, es ist gleichzeitig aber insbesondere bei schwach gedämpften Resonanzmeßsystemen sehr langsam, da es sich um einen Suchvorgang handelt, bei dem die Frequenz des bekannten Anregungssignals in Abhängigkeit der Phase zu dem Antwortsignal geändert wird. Dabei muß die Änderungsgeschwindigkeit der Frequenz des bekannten Anregungssignals begrenzt werden, damit das Resonanzmeßsystem für jede Anregungsfrequenz einen stationären Zustand erreicht, es müssen also alle Ausgleichsvorgänge nach der Veränderung der Anregungsfrequenz abgeklungen sein.

Bei den hier betrachteten schwingfähigen Systemen - insbesondere Systemen zweiter Ordnung - ist der Phasenverlauf über die Frequenz in guter Näherung eine arctan-Funktion mit einem steilen Verlauf im Resonanzbereich und mit einem flachen Verlauf außerhalb des Resonanzbereichs. Damit ist das zuvor beschriebene indirekte Verfahren mit der Anregung des Resonanzmeßsystems über das bekannte Anregungssignal in der Nähe der Eigenfrequenz aufgrund des steilen Phasenverlaufs sehr schnell und genau, aber außerhalb des Resonanzbereichs in einigem Abstand von der interessierenden Eigenfrequenz langsam und ungenau bezüglich der Frequenzauflösung und Sensitivität.

Nach einer bevorzugten Ausgestaltung der Erfindung werden die erste Regelung und die zweite Regelung konkurrierend und/oder komplementär eingesetzt, so daß die in den Werten $f_{0i}$ für die Eigenfrequenz enthaltenen Prozeßgrößen schnell ermittelt werden und/oder das Resonanzmeßsystem schnell in den durch den ermittelten Wert $f_{0i}$ für die Eigenfrequenz gegebene Arbeitspunkt geführt wird. Die erste Regelung und die zweite Regelung sind insoweit konkurrierend, als daß sowohl die erste Regelung als auch die zweite Regelung für sich alleine die interessierende Eigenfrequenz ermitteln und die Anregung des Resonanzmeßsystems auf die korrespondierende Eigenform vornehmen; in diesem Sinne sind die erste Regelung und die zweite Regelung redundant und damit konkurrierend.

Die erste Regelung und die zweite Regelung verhalten sich jedoch auch komplementär zueinander, da sie unterschiedliche Empfindlichkeiten über den gesamten Frequenzbereich aufweisen. Wie zuvor ausgeführt worden ist, ist die Empfindlichkeit des direkten Verfahrens unter Nutzung der Wechselanteile der Projektionskomponenten des Antwortsignals über die Frequenz gleichbleibend, wohingegen die Empfindlichkeit des indirekten Verfahrens unter Auswertung der Gleichanteile der Projektionskomponenten des Antwortsignals $y_i(t)$ außerhalb des Resonanzbereichs des Resonanzmeßsystems sehr gering ist und innerhalb des Resonanzbereichs sehr groß ist, so daß bei dem gemeinsamen Einsatz der beiden Verfahren das direkte Verfahren außerhalb des Resonanzbereiches dominiert und das indirekte Verfahren innerhalb des Resonanzbereiches dominiert. Die erste Regelung und die zweite Regelung ergänzen sich und können daher auch komplementär fusioniert werden.

In einer bevorzugten Ausgestaltung des erfindungsgemäßen Verfahrens werden die Werte $f_{0i}$ der Eigenfrequenzen der jeweiligen Eigenform modellbasiert aus den Projektionskomponenten des Antwortsignals $y_i(t)$ ermittelt.

Das Schwingverhalten eines Resonanzmeßsystems kann mathematisch grundsätzlich durch eine Lagrange-Gleichung 2. Art beschrieben werden, wobei jede interessierende Eigenform der Schwingungen einen verallgemeinerten Freiheitsgrad darstellt. Bei Coriolis-Massedurchflußmeßgeräten entspricht eine Schwingung in der ersten Eigenform beispielsweise der gleichphasigen, translatorischen Bewegung der Massen des Meß- bzw. Trägerrohres. Eine Rotation der Massen um den Mittelpunkt der Meßrohre entspricht einer Schwingung in der zweiten Eigenform. Das Differentialgleichungssystem für alle betrachteten n Eigenformen lautet allgemein:

$$M\ddot{\underline{x}}(t) + D\dot{\underline{x}}(t) + C\underline{x}(t) = \underline{F}(t), \qquad\qquad \text{(Glg. 1)}$$

wobei $M$ die Trägheitsmatrix, $D$ die Dämpfungsmatrix, $C$ die Steifigkeitsmatrix und $\underline{F}$ die Kraftanregung ist.

Die Anwendung der Fouriertransformation auf Glg. 1 für die Anfangsbedingungen $\underline{x}(0) = 0$ bewirkt eine Algebraisierung der Bewegungsgleichungen. Werden zur Erfassung der Bewegung des Resonanzmeßsystems z. B. Geschwindigkeitssensoren (z.B. Magnet/Spule) für die Messung der Bewegungen verwendet, dann ist $\underline{x}(t)$ der gemessene Antwortvektor und der Frequenzgang des Resonanzmeßsystems lautet:

$$G(j\omega) = \frac{V(j\omega)}{F(j\omega)} = \frac{j\omega}{-\omega^2 M + j\omega D + C}. \qquad\qquad \text{(Glg. 2)}$$

Entsprechendes gilt, wenn Auslenkungs- oder Beschleunigungssensoren verwendet werden.

Mögliche Kopplungen der Eigenformen werden durch Elemente der Matrizen $M, D,$ und $C$ außerhalb der Hauptdiagonalen charakterisiert. Die Parameter und ihre physikalische Bedeutung, insbesondere für die Kopplung, lassen sich anhand der ausgeschriebenen Bewegungsgleichungen für die erste und zweite Eigenform eines Coriolis-Meßrohrs veranschaulichen:

$$\begin{aligned} m_1\ddot{x}_1 + d_1\dot{x}_1 + c_1 x_1 + k_{b21}\ddot{x}_2 + k_{v21}\dot{x}_2 + k_{cor21}\dot{x}_2 + k_{s21}x_2 &= F_1 \\ k_{b12}\ddot{x}_1 + k_{v12}\dot{x}_1 + k_{cor12}\dot{x}_1 + k_{s12}x_1 + m_2\ddot{x}_2 + d_2\dot{x}_2 + c_2 x_2 &= F_2 \end{aligned} \qquad \text{(Glg. 3)}$$

Dabei ist $m_i$ die Schwingmasse der jeweiligen Eigenforin, $d_i$ die Dämpfungskonstante der jeweiligen Eigenform, $c_i$ die Federkonstante der jeweiligen Eigenform, $k_{xxx}$ Beschleunigung-, Geschwindigkeit- und Weg-Kopplung der Eigenformen ($k_{corxx}$ sind geschwindigkeitsproportionale Kopplungen, die proportional dem Massenstrom sind) und $F_i$ ist die Anregungskraft der jeweiligen Eigenform.

Die Kopplungen der Eigenformen kommen entweder durch die nicht beabsichtige Asymmetrie im Aufbau oder durch den Massenstrom zustande. Sie werden aus den Differenzen der Schwingmassen und Dämpfungs- und Federkonstanten der Meßrohrhälften gebildet und sind im Normalfall gegenüber den entsprechenden Parametern $m_i, d_i, c_i$ sehr klein. In dem vorliegenden Modell werden alle Kopplungen auf Null gesetzt, womit die Matrizen $M$, $D$, und $C$ zu Diagonalmatrizen werden. Dann lassen sich die einzelnen Eigenformen separat durch eine Übertragungsfunktion zweiter Ordnung beschreiben. Die Übertragungsfunktion der i-ten Eigenform lautet:

$$G_i(s) = \frac{k_i s}{s^2 + 2\omega_{0i}d_i^{\bullet}s + \omega_{0i}^2}. \qquad\qquad \text{(Glg. 4)}$$

Diese Übertragungsfunktion besitzt je drei Parameter für die jeweilige Eigenform i, die durch die Federkonstante $c_i$, die schwingende Masse $m_i$, und den Dämpfungskoeffizienten $d_i$ bestimmt sind. Die Bestimmungsgleichungen lauten:

$$k_i = \frac{1}{m_i} \;,\; \omega_{0i} = \sqrt{\frac{c_i}{m_i}} \;\text{ und }\; d_i^{\bullet} = \frac{d_i}{2m\omega_{0i}}.$$

Die Parameter des Meßrohres $m_i$ und $d_i$ ändern sich mit der Geschwindigkeit der Instationarität der Strömung sehr schnell. Damit liegt entsprechend der Änderung der Schwingungsmasse $m_i$ und des Dämpfungskoeffizienten $d_i$ ein stark zeitvariantes System vor. Für die Regelungen innerhalb des erfindungsgemäßen Verfahrens bedeutet dies, daß die Dynamik der Messung und Regelung mit der Dynamik der Instationarität der Strömung Schritt halten muß, da andernfalls ständige Unterbrechungen der Messung der Prozeßgrößen unvermeidbar sind.

Aus Gründen der Übersichtlichkeit wird das Modell des Resonanzmeßsystems zum Zwecke der Messung der Eigenfrequenzen und der Anregung des Schwingelements - Coriolis-Meßrohr - in seinen Eigenfrequenzen soweit vereinfacht, daß das Verhalten der Eigenformen jeweils durch die ungekoppelte Übertragungsfunktion nach Glg. 4 wiedergegeben werden kann. D. h., die Kopplungen zwischen den vorhandenen Eigenformen werden bei der Beschreibung nicht explizit berücksichtigt. Dies ist zulässig und sinnvoll, da die Eigenformen bei den Eigenfrequenzen meist gut voneinander entkoppelt sind.

Das Resonanzmeßsystem wird zunächst bei einer Anregung mit bekannten Anregungssignalen betrachtet, vorliegend nämlich bei einer harmonischen Anregung. Es gilt:

$$m_i \ddot{x}_i + d_i \dot{x}_i + c_i x_i = F_i \cos(\omega_i t + \varphi_{0i}) \qquad \text{(Glg. 5)}$$

mit den Anfangsbedingungen $x_i(t = 0) = x_{i0}$ und $\dot{x}_i(t = 0) = \dot{x}_{i0}$.

Die Lösung der von Glg. 5 für die Geschwindigkeitsantwort der Eigenformen lautet:

$$y_i(t) = [P_i \cos(\omega_{0i}\sqrt{1 - D_i^2}\,t) + Q_i \sin(\omega_{0i}\sqrt{1 - D_i^2}\,t)]e^{-\omega_{0i}D_i t} \\ + C_i \cos(\omega t) + E_i \sin(\omega t) \qquad \text{(Glg. 6)}$$

mit

$$P_i = \frac{2\omega_{0i}^3 D_i F_i \cos(\varphi_{0i}) - \omega_i(\omega_{0i}^2 - \omega_i^2 - 4\omega_{0i}^2 D_i^2)F_i \sin(\varphi_{0i})}{m_i[\omega_i^4 + (4D_i^2 - 2)\omega_i^2 \omega_{0i}^2 + \omega_{0i}^4]} + \dot{x}_{i0}$$

$$Q_i = -\frac{[\omega_{0i}^2 \omega_i^2 + (2D_i^2 - 1)\omega_{0i}^4]F_i \cos(\varphi_{0i})}{m_i(\omega_{0i}\sqrt{1 - D_i^2})[\omega_i^4 + (4D_i^2 - 2)\omega_i^2 \omega_{0i}^2 + \omega_{0i}^4]} \\ - \frac{[\omega_{0i}^3 \omega_i D_i(2D_i^2 - 3) + \omega_{0i}\omega_i^3 D_i]F_i \sin(\varphi_{0i})}{m_i(\omega_{0i}\sqrt{1 - D_i^2})[\omega_i^4 + (4D_i^2 - 2)\omega_i^2 \omega_{0i}^2 + \omega_{0i}^4]}, \\ - \frac{\dot{x}_{i0}D_i + \omega_{0i}x_{i0}}{\sqrt{1 - D_i^2}}$$

$$C_i = \frac{2\omega_i^2 \omega_{0i} D_i F_i \cos(\varphi_{0i}) - \omega_i(\omega_{0i}^2 - \omega_i^2)F_i \sin(\varphi_{0i})}{m_i[\omega_i^4 + (4D_i^2 - 2)\omega_i^2 \omega_{0i}^2 + \omega_{0i}^4]},$$

$$D_i = \frac{d_i}{2m_i \omega_{0i}}$$

und

$$E_i = -\frac{2\omega_i^2 \omega_{0i} D_i F_i \sin(\varphi_{0i}) - \omega_i(\omega_i^2 - \omega_{0i}^2)F_i \cos(\varphi_{0i})}{m_i[\omega_i^4 + (4D_i^2 - 2)\omega_i^2 \omega_{0i}^2 + \omega_{0i}^4]}.$$

Insgesamt ergibt sich damit aus Glg. 6 der folgende Zusammenhang:

$$y_i(t) = A_i \sin(\omega_i t + \varphi_i) + B_i \cdot e^{-\omega_{0i}D_i t} \cdot \sin[(\omega_{0i}\sqrt{1 - D_i^2})t + \varphi_{\omega 0i}] \qquad \text{(Glg. 7)}$$

mit

$$A_i = \sqrt{E_i^2 + C_i^2}, \quad B_i = \sqrt{P_i^2 + Q_i^2}, \quad \varphi_i = \arctan(\frac{C_i}{E_i}), \quad \varphi_{\omega 0i} = \arctan(\frac{P_i}{Q_i}).$$

Das Antwortsignal der Eigenformen besteht aus der Überlagerung des gedämpften Resonanzfrequenzsignals und des bekannten Anregungssignals bzw. eines harmonischen Signals mit der Frequenz des Anregungssignals, wenn das Schwingelement - das Coriolis-Meßrohr - von einem Signal angeregt wird, dessen Frequenz sich von der jeweiligen Resonanzfrequenz der Eigenformen unterscheidet. Beim Übergang zwischen zwei quasistationären Zuständen - beispielsweise hervorgerufen durch prozeßbedingte Änderungen der Parameter $c_i$, $m_i$ und $d_i$ (multiplikative Prozeßanregung) enthält das Antwortsignal zwei Frequenzen, die des Anregungssignals und die der Resonanzstelle.

Unter der Voraussetzung, daß die Dämpfung der Eigenformen deutlich kleiner als eins ist ($D_i \ll 1$), gilt in guter Näherung die folgende Gleichung als Modell für die Geschwindigkeitsantwort der Eigenformen:

$$y_i(t) = A_i \sin(\omega_i t + \varphi_i) + B_i \cdot e^{-\omega_{0i} D_i t} \cdot \sin(\omega_{0i} t + \varphi_{\omega 0i}) \qquad \text{(Glg. 8)}$$

Im quasistationären Zustand liefert die Phase $\varphi_i$ zwischen dem bekannten Anregungssignal und dem Antwortsignal die Information über den Wert der Eigenfrequenz der jeweiligen Eigenform. Im Zustandsübergang liefert auch der zweite, die Dämpfung enthaltende Term in Glg. 8 Information über den Wert der Eigenfrequenz der jeweiligen Eigenform. Die Phase $\varphi_{\omega 0i}$ markiert den Anfang des Zustandsüberganges von einem zum anderen quasistationären Zustand. Sie wird aus Gründen der Übersichtlichkeit bei weiteren Betrachtungen zu Null gesetzt, womit das dem erfindungsgemäßen Verfahren zugrundeliegende Modell weiter vereinfacht ist zu:

$$y_i(t) = A_i \sin(\omega_i t + \varphi_i) + B_i \cdot e^{-\omega_{0i} D_i t} \cdot \sin(\omega_{0i} t) \qquad \text{(Glg. 9)}$$

Zur Beschreibung des Verhaltens des Resonanzmeßsystems bzw. des Schwingelements des Resonanzmeßsystems auf unbekannte Anregungssignale aus dem Prozeß (additive Prozeßanregung) wird von einer mathematischen Formulierung des Prozeßrauschens als weißes Rauschen W(t) ausgegangen. Weißes Rauschen ist definitionsgemäß extrem breitbandig, verfügt nämlich über ein über die Frequenz konstantes Leistungsspektrum $S_w$(f). Das Schwingelement wirkt auf die Anregung wie ein Bandpaß, so daß aus dem weißen Rauschen des "unbekannten" Anregungssignals ein farbiges Rauschen $S_n$(f) des Ausgangssignals wird mit einem Amplitudenmaximum im Bereich der interessierenden Resonanzfrequenz des Resonanzmeßsystems. In der mathematischen Formulierung gilt für die Leistung des farbigen Rauschens

$$P_n = \int_0^\infty S_n(f) df = \int_0^\infty k |H(f)^2| df = k B_{eq} \qquad \text{(Glg. 10)}$$

mit

$$B_{eq} = \int_0^\infty |H(f)^2| df, \quad$$ wobei W(t) das weiße Rauschen, $S_w$(f) die spektrale Leistung des weißen Rauschens, H(f) den Frequenzgang des Schwingelements, $V_n$(t) das farbige Rauschen, $S_n$(f) die spektrale Leistung des farbigen Rauschens, $P_n$ die Leistung des farbigen Rauschens und $B_{eq}$ die äquivalente Bandbreite bezeichnet.

Aufgrund der Bandpaßeigenschaften des Meßrohres mit einer sehr kleinen Bandbreite resultiert als Antwortsignal hauptsächlich ein Signal, dessen Frequenz mit der Mittenfrequenz bzw. der Eigenfrequenz des Meßrohres übereinstimmt. In erster Nährung läßt sich das Antwortsignal durch ein harmonisches Signal beschreiben:

$$y_{iPro}(t) = B_{iPro} \sin(\omega_{0i} t). \qquad \text{(Glg. 11)}$$

Neben der additiven Prozeßanregung kann auch noch die multiplikative Prozeßanregung auf das Resonanzmeßsystem wirken und berücksichtigt werden. Diese ist in der Änderung wenigstens eines Parameters des Resonanzmeßsystems begründet und wird deshalb teils auch als parametrische Anregung bezeichnet. Bei der multiplikativen Prozeßanregung wird davon ausgegangen, daß das Schwingelement durch das indirekte Verfahren oder durch additive Prozeßanregung energetisch ist, also in Glg. 5 mindestens eine der beiden Anfangsbedingungen ungleich Null ist. Ändert sich nun prozeßbedingt ein Parameter $c_i$, $m_i$ oder $d_i$, so läßt sich Glg. 5 mit den zum Zeitpunkt der Parameteränderung gültigen Anfangsbedingung lösen. Die Lösung entspricht Glg. 7 mit neuen Parametern. Die multiplikative Prozeßanregung bewirkt einen Übergang von einem quasistationären Zustand in einem anderen quasistationären Zustand.

Zusammenfassend wird bei einer bevorzugten Ausgestaltung des erfindungsgemäßen Verfahrens als Modell der Eigenformen des Resonanzmeßsystems bzw. der Eigenformen des Schwingelements eine lineare Differentialgleichung zweiter Ordnung verwendet, insbesondere wobei als bekanntes Anregungssignal $F_i$(t) der jeweiligen Eigenform eine harmonische Schwingung mit einer Anregungsfrequenz $f_i$ bzw. mit einer Anregungskreisfrequenz $\omega_i$ verwendet wird, insbesondere wobei das unbekannte Anregungssignal W(t) als weißes Rauschen angenommen wird und wobei insbesondere vereinfachend als Modell für das Antwortsignal $y_i$(t) der jeweiligen Eigenform als Geschwindigkeitssignal der Schwingung folgender Zusammenhang verwendet wird:

$$
\begin{aligned}
y_i(t) = {} & A_i \sin(\omega_i t + \varphi_i) + \\
& + B_i \cdot e^{-\omega_{0i} D_i t} \cdot \sin(\omega_{0i} t) + . \\
& + B_{iPro} \sin(\omega_{0i} t)
\end{aligned}
\qquad \text{(Glg. 12)}
$$

$y_i$(t) ist dabei das Antwortsignal der i-ten Eigenform des Schwingelements - Coriolis-Meßrohr -, gebildet aus wenigstens einem Signal wenigstens eines Schwingungsaufnehmers, der Index i bezeichnet die i-te anzuregende und auszuwertenden Eigenform, $\omega_i$ ist die Kreisfrequenz des generierten Anregungssignals für die i-te Eigenform, $A_i$ ist die resultierende Antwortamplitude für das generierte und daher bekannte Anregungssignal bei der Kreisfrequenz $\omega_i$, $\varphi_i$ ist die Antwortphase für das generierte Anregungssignal bei der Kreisfrequenz $\omega_i$, $B_i$ ist ein Parameter des Meßrohres bezüglich der i-ten Eigenform bei der multiplikativen Prozeßanregung, $\omega_{0i}$ ist die Eigenkreisfrequenz der i-ten Eigenform des Meßrohres, $D_i$ ist die Dämpfungskonstante der i-ten Eigenform des Meßrohres und $B_{iPro}$ ist ein Parameter des Meßrohres bezüglich der i-ten Eigenform bei der additiven Prozeßanregung. In Glg. 12 ist aus Gründen der Übersichtlichkeit die Antwort der generierten Anregung bezüglich der jeweiligen Eigenform monofrequent wiedergegeben. Bei anderen Ausführungen kann die Anzahl der Frequenzkomponenten der generierten Anregung bezüglich der jeweiligen Eigenformen höher sein.

In einer bevorzugten Ausgestaltung des erfindungsgemäßen Verfahrens werden als orthogonales Bezugssystem zwei um 90° verschobene harmonische Schwingungen verwendet, mit denen das Antwortsignal $y_i$(t) zum Erhalt der orthogonalen Projektionskomponenten (Re$\{y_i\}$, Im$\{y_i\}$) multipliziert wird, wobei eine der harmonischen Schwingungen aus dem bekannten Anregungssignal $F_i$(t) der jeweiligen Eigenform abgeleitet ist; die Multiplikation realisiert die Projektion des Antwortsignals in das orthogonale Bezugsystem.

In der konkreten Realisierung werden beispielsweise die als Geschwindigkeitssignale vorliegenden Antwortsignale der ersten und der zweiten Eigenform mit einem Sinussignal und mit einem Kosinussignal der Anregungsfrequenz multipliziert. In diesem Fall ergeben sich die Projektionskomponenten des Antwortsignals zu (mit i = 1, 2):

$$
\begin{aligned}
y_i(t)\sin(\omega_i t) = {} & \operatorname{Re}\{y_i\} \\
= {} & A_i \sin(\omega_i t + \varphi_i)\sin(\omega_i t) + (B_i e^{-\omega_{0i} D_i t} + B_{iPro})\sin(\omega_{0i} t)\sin(\omega_i t) \\
= {} & \frac{A_i}{2}\big[\cos(\varphi_i) - \cos(2\omega_i t + \varphi_i)\big] + \\
& + \frac{(B_i e^{-\omega_{0i} D_i t} + B_{iPro})}{2}\big[\cos(\omega_{0i} - \omega_i)t - \cos(\omega_{0i} + \omega_i)t\big]
\end{aligned}
\qquad \text{(Glg. 13)}
$$

und

8

$$y_i(t)\cos(\omega_i t) = \mathrm{Im}\{y_i\}$$
$$= A_i \sin(\omega_i t + \varphi_i)\cos(\omega_i t) +$$
$$(B_i e^{-\omega_{0i} D_i t} + B_{i\mathrm{Pro}})\sin(\omega_{0i} t)\cos(\omega_i t) \qquad . \qquad \text{(Glg. 14)}$$
$$= \frac{A_i}{2}\left[\sin(\varphi_i) + \sin(2\omega_i t + \varphi_i)\right] +$$
$$+ \frac{(B_i e^{-\omega_{0i} D_i t} + B_{i\mathrm{Pro}})}{2}\left[\sin(\omega_{0i} - \omega_i)t + \sin(\omega_{0i} + \omega_i)t\right]$$

Die projizierten Komponenten könne dabei als Real- und Imaginärteil eines Zeigers in der komplexen Ebene aufgefaßt werden, was in den Glg. 13 und 14 durch Re und Im zum Ausdruck kommt.

Die Gleichanteile der Projektionskomponenten in den Glg. 13 und 14 enthalten die indirekte, in der Phase verschlüsselte Information über den Wert der Eigenfrequenz. Diese Gleichanteile sind außerhalb der Resonanzbereiche des Resonanzmeßsystems aufgrund der geringen Schwingungsamplituden klein. Die Wechselanteile der Projektionskomponenten tragen in ihren Parametern die direkte Information über den Wert der Eigenfrequenz. Sie können zur Bestimmung der Werte bzw. Lage der Eigenfrequenzen nach verschiedenen Verfahren genutzt werden.

Bei einer besonders bevorzugten Ausgestaltung der Erfindung wird durch Hochpaßfilterung und/oder Tiefpaßfilterung der Projektionskomponenten ($\mathrm{Re}\{y_i\}$, $\mathrm{Im}\{y_i\}$) des Antwortsignals $y_i(t)$ jeweils ein Wechselanteil der Projektionskomponenten ($\mathrm{Re}\{y_i\}$), $\mathrm{Im}\{y_i\}$) gewonnen. Vorzugsweise werden die Frequenzanteile $\omega_{0i} + \omega_i$ und $2\omega_i$ in den Gleichungen Glg.en 13 und 14 mit einem Tiefpaßfilter ausgefiltert, um die Wechselanteile mit der Differenzkreisfrequenz $\omega_{0i} - \omega_i$ zur Bestimmung der Eigenfrequenz zu nutzen. Damit wird aus den beiden Glg.en 13 und 14 ohne Berücksichtigung der Gleichanteile (gefiltert durch einen Hochpaß-Filter oder weil die Gleichanteile außerhalb des Resonanzbereiches aufgrund der kleine Schwingungsamplitude vernachlässigbar sind):

$$\mathrm{Re}\{y_{iw}\} = \frac{(B_i e^{-\omega_{0i} D_i t} + B_{i\mathrm{Pro}})}{2}\cos(\omega_{0i} - \omega_i)t \qquad \text{(Glg. 13')}$$

und

$$\mathrm{Im}\{y_{iw}\} = \frac{(B_i e^{-\omega_{0i} D_i t} + B_{i\mathrm{Pro}})}{2}\sin(\omega_{0i} - \omega_i)t \qquad \text{(Glg. 14')}$$

Die Real- und Imaginärteile gemäß den Glg.en. 13' und 14' beschreiben einen komplexwertigen Zeiger $\underline{S}$, der mit einer Kreisfrequenz von $\omega_{0i} - \omega_i$ rotiert; die Kreisfrequenz hängt von der interessierenden Eigenkreisfrequenz ab:

$$\underline{S} = \mathrm{Re}\{y_{iw}\} + j\,\mathrm{Im}\{y_{iw}\}$$
$$= \frac{(B_i e^{-\omega_{0i} D_i t} + B_{i\mathrm{Pro}})}{2}\left[\cos(\omega_{0i} - \omega_i)t + j\sin(\omega_{0i} - \omega_i)t\right]$$

Die grundlegende Idee besteht darin, durch Bestimmung der Kreisfrequenz $\omega_{0i} - \omega_i$ des komplexen Zeigers auf den Wert Eigenkreisfrequenz der betrachteten Eigenform zu schließen. Dazu wird vorliegend die Phasenverschiebung $\varphi_{\mathrm{pro}}$ des Zeigers $\underline{S}$ während der Zeit $\Delta t$ zwischen zwei Zeitpunkten $t_1$ und $t_2$ betrachtet. Multiplikation der Zeiger $\underline{S}(t_1)$ und $\underline{S}^*(t_2)$ ergibt ($\underline{S}^*$ ist der konjugierte Zeiger $\underline{S}$):

$$\underline{S}(t_1)\cdot\underline{S}^*(t_2) = \left[\mathrm{Re}\{y_{iw}(t_1)\} + j\,\mathrm{Im}\{y_{iw}(t_1)\}\right]\cdot\left[\mathrm{Re}\{y_{iw}(t_2)\} - j\,\mathrm{Im}\{y_{iw}(t_2)\}\right]$$
$$= \mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\} \qquad ,$$
$$+ j\left[\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}\right]$$

wobei daraus die Phasendifferenz des komplexen Zeigers unmittelbar berechenbar ist:

$$\varphi_{Pro} = \arctan\left(\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}\right)$$

Einsetzen der Glg.en 13' und 14' ergibt dann mittelbar

$$\varphi_{Pro} = \arctan\left(\frac{\sin(\omega_{0i}-\omega_i)t_1\cdot\cos(\omega_{0i}-\omega_i)t_2 - \cos(\omega_{0i}-\omega_i)t_1\cdot\sin(\omega_{0i}-\omega_i)t_2}{\cos(\omega_{0i}-\omega_i)t_1\cdot\cos(\omega_{0i}-\omega_i)t_2 + \sin(\omega_{0i}-\omega_i)t_1\cdot\sin(\omega_{0i}-\omega_i)t_2}\right)$$

bzw.

$$\varphi_{Pro} = \arctan\left(\frac{\sin(\omega_{0i}-\omega_i)(t_1-t_2)}{\cos(\omega_{0i}-\omega_i)(t_1-t_2)}\right).$$

Mit dem Zusammenhang $\varphi_{pro} = (\omega_{0i} - \omega_i)(t_1 - t_2)$ folgt dann unter Verwendung der beiden vorstehenden Gleichungen für die gesuchte Eigenfrequenz der jeweiligen Eigenform des Resonanzmeßsystems (Glg. 15):

$$f_{0i} = f_i + \frac{1}{2\pi(t_1-t_2)}\arctan\left(\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}\right).$$

Hierbei können durch eine geeignete Auswahl der Zeitdifferenz nach der folgenden Ungleichung $t_1 - t_2 < \dfrac{\pi}{\omega_{0i}-\omega_i}$

Sprünge in der Phasenberechnung vermieden werden.

In einer weiteren vorteilhaften Ausgestaltung des erfindungsgemäßen Verfahrens ist der erste Regelkreis als Frequenzregelkreis ausgestaltet und wird unter Verwendung der Näherung arctan(x) = x die folgende Regeldifferenz zu Null geregelt:

$$f_{0i} - f_i = \frac{1}{2\pi(t_1-t_2)}\cdot\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}. \quad \text{(Glg. 16)}$$

Hier entsteht zwar ein dynamischer Fehler der Eigenfrequenzbestimmung, der jedoch verschwindet, wenn die Regeldifferenz ausgeregelt ist. Damit wird über die Information der additiven und multiplikativen Prozeßanregung die Arbeitsfrequenz auf die Eigenfrequenz geregelt.

Ein weitere vorteilhafte Ausgestaltung des erfmdungsgemäßen Verfahrens ist dadurch gekennzeichnet, daß durch Tiefpaßfilterung der Projektionskomponenten (Re$\{y_i\}$, Im$\{y_i\}$) des Antwortsignals $y_i(t)$ jeweils ein Gleichanteil der Projektionskomponenten (Re$\{y_i\}$, Im$\{y_i\}$) gewonnen wird, die Phasendifferenz $\varphi_i$ des Antwortsignals $y_i(t)$ durch die Gleichanteile der Projektionskomponenten (Re$\{y_i\}$, Im$\{y_i\}$) gewonnen wird und die Phasendifferenz $\varphi_i$ über die Anregungsfrequenz $f_i$ durch den als Phasenregelkreis ausgestalteten zweiten Regelkreis zu Null geregelt wird, womit die Anregungsfrequenz $f_i$ der Eigenfrequenz $f_{0i}$ des Resonanzmeßsystems entspricht.

Gemäß einem weiteren erfindungsgemäßen Verfahren, das auf der Untersuchung der Gleichanteile der Projektionskomponenten des Ausgangssignals beruht, wird durch Tiefpaßfilterung der Projektionskomponenten (Re$\{y_i\}$, Im$\{y_i\}$) des Antwortsignals $y_i(t)$ jeweils ein Gleichanteil der Projektionskomponenten (Re$\{y_i\}$, Im$\{y_i\}$) gewonnen, wird die Phasenverschiebung $\varphi_i$ des Antwortsignals $y_i(t)$ durch die Gleichanteile der Projektionskomponenten (Re$\{y_i\}$, Im$\{y_i\}$) gewonnen und wird aus der Phasenverschiebung $\varphi_i$ ein Wert der Eigenfrequenz $f_{0i}$ des Resonanzmeßsystems erhalten, insbesondere aus den Zusammenhängen

$$\mathrm{Re}\{y_{iG}\} = \frac{A_i}{2}\cos\varphi_i \quad \text{und} \quad \mathrm{Im}\{y_{iG}\} = \frac{A_i}{2}\sin\varphi_i, \qquad \text{(Glg. 17a, 17b)}$$

$$\varphi_i = \arctan\left(\frac{\mathrm{Im}\{y_{iG}\}}{\mathrm{Re}\{y_{iG}\}}\right) = \frac{\pi}{2} - \arctan\left(\frac{2\omega_{0i}D_i\omega_i}{\omega_{0i}^2 - \omega_i^2}\right). \qquad \text{(Glg. 18)}$$

Die Gleichanteile gemäß den Glg.en 17a, 17b ergeben sich unmittelbar aus den Glg.en 13 und 14. Diese Variante ist insbesondere dann vorteilhaft einsetzbar, wenn der Wert für die Dämpfungskonstante des Systems schon bekannt ist, andernfalls ist der Wert der Dämpfungskonstante vorgreiflich zu ermitteln.

Bei dem erfindungsgemäßen Verfahren werden verschiedenen Informationsquellen zur Ermittlung der Eigenfrequenz des Resonanzsystems genutzt und in eigenen Regelkreisen zum Betrieb des Resonanzsystems in der ermittelten Eigenfrequenz verwendet. Bevorzugt ist das Verfahren so ausgestaltet, daß bei der Erzeugung des Anregungssignals F(t) derjenige Regelkreis maßgebend ist, der in dem jeweiligen Frequenzbereich die größere Empfindlichkeit aufweist. Insbesondere ist es sinnvoll, das Verfahren so auszugestalten, daß der erste Regelkreis außerhalb des Resonanzbereichs der jeweiligen Eigenform des Resonanzmeßsystems maßgebend ist und der zweite Regelkreis innerhalb des jeweiligen Eigenform des Resonanzbereichs des Resonanzmeßsystems maßgebend ist. Zur Umsetzung werden durch einen Signalgenerator die Stellgrößen des ersten Regelkreises und des zweiten Regelkreises durch verschiedene Funktionen fusioniert, vorzugsweise durch Bildung eines Summensignals aus den Stellgrößen.

In einer weiteren bevorzugten Ausgestaltung der Erfindung wird durch einen dritten Regelkreis die Amplitude der Schwingung des Schwingelements des Resonanzmeßsystems auf einen vorgegebenen Wert geregelt, so daß stets eine ausreichende Anregung des Resonanzmeßsystems gewährleistet ist und die Amplitude gleichzeitig auch sicher begrenzbar ist.

Die Erfindung betrifft ferner ein Resonanzmeßsystem, das so ausgestaltet ist, daß es mit einem der vorstehend beschriebenen Verfahren betrieben werden kann.

Im einzelnen gibt es nun verschiedene Möglichkeiten, das erfindungsgemäße Verfahren zum Betreiben eines Resonanzmeßsystems und das erfmdungsgemäße Resonanzmeßsystem auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1    die schematische Darstellung eines Resonanzmeßsystems in Form eines Coriolis-Massedurchflußmeßgeräts mit angedeuteten Ersatzschaltgrößen zur Modellbildung,

Fig. 2    ein mechanisches Ersatzschaltbild mit konzentrierten Parametern in Form eines Feder-Masse-Systems des in Fig. 1 dargestellten Coriolis-Massedurchflußmeßgeräts,

Fig. 3    die schematische Darstellung des erfindungsgemäßen Verfahrens zum Betreiben eines Resonanzmeßsystems in Form eines Blockschaltbildes und

Fig. 4    der Verlauf der Phasenverschiebung nach dem direkten und dem indirekten Verfahren über der Anregungsfrequenz.

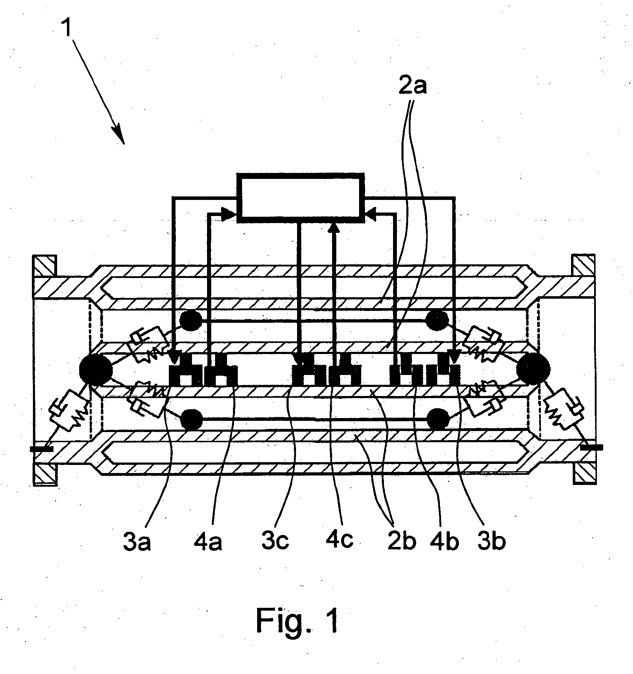

Fig. 1 zeigt die schematische Darstellung eines Coriolis-Massedurchflußmeßgeräts, das hier stellvertretend für die betrachteten Resonanzmeßsysteme 1 aufgeführt ist. Das Resonanzmeßsystem 1 verfügt vorliegend über zwei mit einem Prozeß wechselwirkende Schwingelemente 2a, 2b, drei Schwingungserzeuger 3a, 3b, 3c und drei Schwingungsaufnehmer 4a, 4b, 4c. Die Schwingungselemente 2a, 2b werden durch die Schwingungserzeuger 3a, 3b, 3c üblicherweise mit bekannten Anregungssignalen $F_i(t)$ zu Schwingungen in wenigstens einer Eigenform angeregt, wobei im Falle der als Coriolis-Meßrohre ausgestalteten Schwingelemente 2a, 2b eine erste Eigenform in einer lediglich einen Bauch ausbildenden Schwingung der Coriolis-Meßrohre bestehen kann und eine zweite Eigenform in der Schwingung der Coriolis-Meßrohre bestehen kann, bei der zusätzlich ein mittlerer Knotenpunkt der Schwingung ausgebildet ist. Die Anzahl der Schwingungserzeuger 3a, 3b, 3c und der Schwingungsaufnehmer 4a, 4b, 4c hängt allgemein davon ab, welche Eigenformen der Schwingung der Coriolis-Meßrohre - oder des Coriolis-Meßrohrs - anregbar und beobachtbar sein sollen. Die in Fig. 1 dargestellte Anordnung ermöglicht es jedenfalls, die Coriolis-Meßrohre in einer ersten Eigenform und in einer zweiten Eigenform der Schwingung anzuregen und diese Schwingungen zu beobachten.

Der Prozeß besteht hier in einem explizit nicht dargestellten Mediumstrom, der durch die als Coriolis-Meßrohre ausgestalteten Schwingelemente 2a, 2b strömt und aufgrund des Coriolis-Effekts mit dem Resonanzmeßsystem 1 wechselwirkt, nämlich die Schwingelemente 2a, 2b beeinflußt. Der Massendurchfluß kann bestimmt werden über die Messung einer Zeitdifferenz der Schwingungen in der jeweiligen Eigenform im ein- und auslaufseitigen Bereich der Schwingelemente 2a, 2b. Die Anregung der Schwingelemente 2a, 2b über die Schwingungserzeuger 3a, 3b, 3c mit einem bekannten Anregungssignal $F_i(t)$ erfolgt vorteilhafterweise mit der Eigenfrequenz der ersten Eigenform des Resonanzmeßsystems 1, da dann am wenigsten Energie benötigt wird, um die Schwingung aufrechtzuerhalten bei gleichzeitig maximaler Amplitude der Schwingung.

Die Eigenfrequenz des mit dem Prozeß wechselwirkenden Resonanzmeßsystems 1 ist aber auch deshalb von Interesse, weil in der Eigenfrequenz weitergehende Informationen über das Resonanzmeßsystem 1 enthalten sind. Dies ist bei dem in Fig. 1 dargestellten Coriolis-Massedurchflußmeßgerät z. B. die Dichte des durch die Schwingelemente 2a, 2b strömenden Mediums. Wenn die Eigenfrequenz des Resonanzmeßsystems 1 bekannt ist, lassen sich also wertvolle zusätzliche Prozeßinformationen gewinnen.

Eine weitere Anregung des Resonanzmeßsystems 1 bzw. der Schwingelemente 2a, 2b resultiert - ob gewollt oder nicht - durch den Prozeß selbst, wobei ein Teil der Anregung über den Prozeß durch unbekannte Anregungssignale W(t) wiedergegeben werden kann. Die Schwingungen der Schwingelemente 2a, 2b werden durch Schwingungsaufnehmer 4a, 4b, 4c erfaßt und als ein Antwortsignal $y_i(t)$ dargestellt, meist in Form eines elektrischen Signals.

Problematisch ist insgesamt bei Resonanzmeßsystemen, daß die für den Betrieb aus den vorgenannten Gründen wichtigen Eigenfrequenzen $f_{0i}$ von verschiedenen Faktoren abhängig sind und sich unter Umständen schlagartig ändern können. In dieser Hinsicht liegen besonders schwierige Einsatzbedingungen von Coriolis-Massedurchflußmeßgeräten beispielsweise bei instationären oder mehrphasigen Strömungen, Anfahrvorgängen, Schaltvorgängen von Ventilen etc. vor. Die plötzliche Änderung der Eigenfrequenz des Resonanzmeßsystems 1 kann dazu führen, daß der Arbeitspunkt des Resonanzmeßsystems 1 verloren geht und erst nach einem vergleichsweise langen Anfahr- bzw. Einregelvorgang wieder aufgefunden und eingeregelt wird. Bis zu diesem Zeitpunkt liefert das Resonanzmeßsystem 1 keine zuverlässig verwertbaren Ergebnisse.

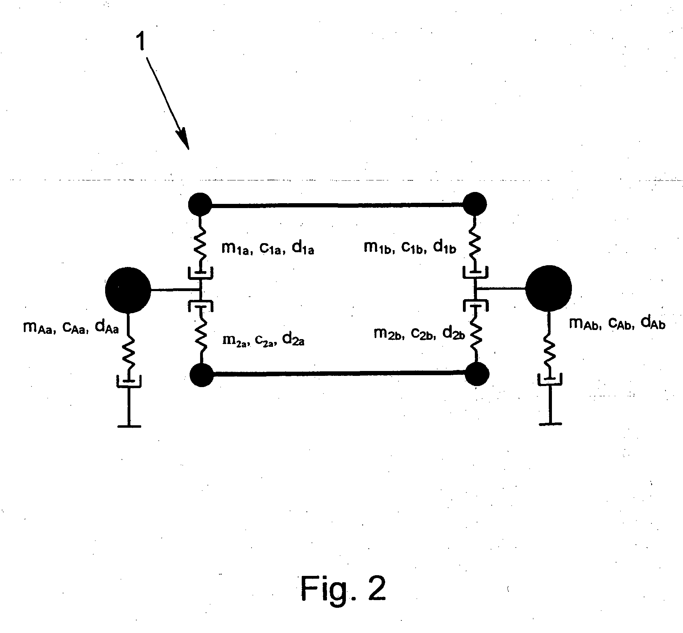

In Fig. 1 ist neben der Struktur des Coriolis-Massedurchflußmeßgerät auch überlagert angedeutet das Feder-Masse-Ersatzschaltbild des als Coriolis-Massedurchflußmeßgerät ausgebildeten Resonanzmeßsystems 1. Angedeutet sind die Massen der Schwingelemente 2a, 2b, des zusammenführenden Flansches, und die federnden Ankopplungen der Massen untereinander sind durch Feder-Dämpfer-Elemente symbolisiert. Das in Fig. 1 angedeutete Feder-Masse-Ersatzschaltbild des Resonanzmeßsystems 1 ist in Fig. 2 nochmals deutlich mit Formelzeichen dargestellt.

In Fig. 1 ist durch die mit einem Richtungssinn versehenen Signallinien angedeutet, daß die bekannten Anregungssignale $F_i(t)$ und die von den Schwingungsaufnehmern erzeugten Antwortsignale $y_i(t)$ zwischen einer nicht näher bezeichneten zentralen Steuereinheit des Resonanzmeßsystems 1 und den Schwingungserzeugern 3a, 3b, 3c einerseits und den Schwingungsaufnehmern 4a, 4b, 4c andererseits ausgetauscht werden können.

Die erfindungsgemäße Idee besteht darin, die auf verschiedenen Anregungen des Schwingelements 2a, 2b resultierenden Komponenten im Antwortsignal $y_i(t)$ auszuwerten und zur unabhängigen Bestimmung eines Wertes für die interessierende Eigenfrequenz $f_{0i}$ heranzuziehen, wobei die verschiedenen dynamischen Eigenschaften der derart nutzbar gemachten Informationsquellen kombiniert werden, so daß auch eine sich zeitlich sehr schnell ändernde Eigenfrequenz $f_{0i}$ des Resonanzmeßsystems 1 nachgeregelt werden kann, selbst bei Einsatzbedingungen von Resonanzmeßsystemen, die bislang als extrem problematisch gegolten haben.

Konkret wird dies dadurch realisiert, daß durch Projektion des Antwortsignals $y_i(t)$ auf ein orthogonales Bezugssystem orthogonale Projektionskomponenten ($\text{Re}\{y_i\}$, $\text{Im}\{y_i\}$) des Antwortsignals erzeugt werden, mit wenigstens einem Teil der Wechselanteile der Projektionskomponenten ($\text{Re}\{y_i\}$, $\text{Im}\{y_i\}$) wenigstens ein erster mit der Eigenfrequenz $f_{0i}$ des Resonanzmeßsystems 1 korrespondierender Wert ermittelt wird und der erste mit der Eigenfrequenz $f_{0i}$ korrespondierende ermittelte Wert zur Anregung des Resonanzmeßsystems 1 mit einer ersten Regelung in einem ersten Regelkreis 5 auf die korrespondierende Eigenform verwendet wird und mit wenigstens einem Teil der Gleichanteile der Projektionskomponenten ($\text{Re}\{y_i\}$, $\text{Im}\{y_i\}$) wenigstens ein zweiter mit der Eigenfrequenz $f_{0i}$ des Resonanzmeßsystems 1 korrespondierender Wert ermittelt wird und der zweite mit der Eigenfrequenz $f_{0i}$ korrespondierende ermittelte Wert zur Anregung des Resonanzmeßsystems 1 mit einer zweiten Regelung in einem zweiten Regelkreis 6 auf die korrespondierende Eigenform verwendet wird. Es liegen also zumindest zwei Regelkreise 5, 6 vor, die eine Regelung des Resonanzmeßsystem 1 auf den gegebenenfalls zeitvarianten Wert für die Eigenfrequenz $f_{0i}$ der jeweiligen Eigenform des Resonanzmeßsystems 1 realisieren.

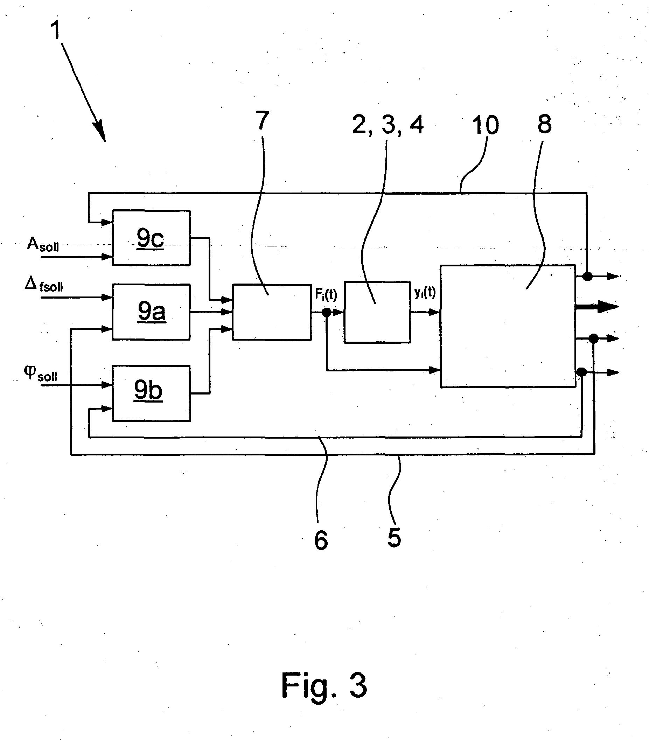

In Fig. 3 ist ein Resonanzmeßsystem 1 mit einer Regelung der Schwingung des Schwingelements 2 auf die Eigenform einer ersten Eigenfrequenz als Blockschaltbild dargestellt. Die von einem Anregungssignal $F_i(t)$ beaufschlagte Strecke besteht hier aus dem Schwingelement 2, den Schwingungserzeugern 3 und den Schwingungsaufnehmern 4, die in einem Block dargestellt sind. In einem Signalgenerator 7 wird das bekannte Anregungssignal $F_i(t)$ der jeweiligen Eigenform generiert und zwar aus den Signalen der Regler 9a, 9b, 9c. Für eine Regelung des Resonanzmeßsystems auf eine weitere Eigenform ist der in Fig. 3 dargestellte Regelkreis nochmals separat zu errichten, so daß ein in einem weiteren Signalgenerator ein weiteres bekanntes Anregungssignal der zusätzlichen Eigenform generiert wird und zwar aus den Signalen weiterer Regler.

Die Ermittlung des ersten Wertes und des zweiten Wertes für die Eigenfrequenz $f_{0i}$ des Resonanzmeßsystems

1 wird aus dem Antwortsignal $y_i(t)$ in der Auswerteeinheit 8 gewonnen, in der das eigentliche in Rede stehende Verfahren zum Betreiben eines Resonanzmeßsystems 1 realisiert ist. Bei der in Fig. 3 durch die Auswerteeinheit 8 realisierten Implementierung des Verfahrens sind die erste Regelung und die zweite Regelung konkurrierend und komplementär realisiert, so daß die in den Werten für die Eigenfrequenz $f_{0i}$ enthaltenen Prozeßgrößen schnell ermittelt werden können und das Resonanzmeßsystem 1 schnell in den durch den ermittelten Wert für die Eigenfrequenz $f_{0i}$ gegebenen Arbeitspunkt geführt werden kann.

Bei dem in Fig. 3 dargestellten Resonanzmeßsystem 1 werden in der Auswerteeinheit 8 die Werte der Eigenfrequenzen $f_{0i}$ der jeweiligen Eigenform modellbasiert aus den Projektionskomponenten ($\mathrm{Re}\{y_i\}$, $\mathrm{Im}\{y_i\}$) des Antwortsignals $y_i(t)$ ermittelt, wobei die mathematische Beschreibung des Resonanzmeßsystems 1 bereits im allgemeinen Teil der Beschreibung hergeleitet worden ist und in Glg. 3 ihren Niederschlag gefunden hat. Glg. 3 zeigt den allgemeinen Fall zweier gekoppelter Bewegungsgleichungen eines Coriolis-Meßrohrs, das in zwei Eigenformen angeregt wird.

Das Schwingungsverhalten läßt sich anhand eines Modells mit konzentrierten Ersatzelementen gemäß Glg. 3 und Fig. 2 beschreiben. Die Ersatzelemente mit Index 1x beschreiben dabei die effektiv wirksamen Massen, Federn und Dämpfer des ersten Meßrohrs, die Elemente mit Index 2x die entsprechenden Parameter des zweiten Meßrohres. Die mit dem Index A gekennzeichneten Ersatzelemente für Massen, Federn und Dämpfer beschreiben die Ersatzelemente der Anschlußflansche, also der Aufhängung. Die Indizes a und b stellen jeweils die linke bzw. rechte Hälfte der Meßrohre dar. Einer Schwingung in der ersten Eigenform entspricht in diesem Modell die gleichphasige, translatorische Bewegung der Massen des Meß- bzw. Trägerrohres. Eine Rotation der Massen um den Mittelpunkt der Meßrohre entspricht einer Schwingung in der zweiten Eigenform.

Bei dem Resonanzmeßsystem 1 gemäß Fig. 3 ist als Modell der Eigenformen des Schwingelements 2a, 2b jeweils eine lineare Differentialgleichung zweiter Ordnung verwendet worden, wobei als bekanntes Anregungssignal $F_i(t)$ eine harmonische Schwingung mit einer Anregungsfrequenz $f_i$ verwendet wird und wobei das unbekannte Anregungssignal, das durch den Prozeß selbst verursacht wird, als weißes Rauschen $W(t)$ angenommen wird, und wobei vereinfachend als Modell für das Antwortsignal $y_i(t)$ als Geschwindigkeitssignal der Zusammenhang gemäß Glg. 12 verwendet wird, wie er ausführlich im allgemeinen Beschreibungsteil hergeleitet worden ist.

Als orthogonales Bezugssystem für die Projektion des Ausgangssignals $y_i(t)$ werden in dem Resonanzmeßsystem 1 gemäß Fig. 3 um 90° verschobene harmonische Schwingungen verwendet, mit denen das Antwortsignal $y_i(t)$ zum Erhalt der orthogonalen Projektionskomponenten ($\mathrm{Re}\{y_i\}$, $\mathrm{Im}\{y_i\}$) multipliziert wird. Als eine der harmonischen Schwingungen wird das bekannte Anregungssignal $F_i(t)$ verwendet, wobei eine Beschreibung der Projektionskomponenten ($\mathrm{Re}\{y_i\}$, $\mathrm{Im}\{y_i\}$) gemäß den Gleichungen 13 und 14 des allgemeinen Beschreibungsteils resultiert.

Die Auswerteeinheit 8 gemäß Fig. 3 nimmt darüber hinaus eine geeignete Hochpaßfilterung und Tiefpaßfilterung der Projektionskomponenten ($\mathrm{Re}\{y_i\}$, $\mathrm{Im}\{y_i\}$) des Antwortsignals $y_i$ vor, so daß jeweils ein Wechselanteil der Projektionskomponenten ($\mathrm{Re}\{y_i\}$, $\mathrm{Im}\{y_i\}$) gewonnen wird, die Phasendifferenz $\varphi_{Pro}$ des durch die Wechselanteile der Projektionskomponenten ($\mathrm{Re}\{y_i\}$, $\mathrm{Im}\{y_i\}$) beschriebenen Zeigers $\underline{S}$ zwischen wenigstens zwei Zeitpunkten $t_1$, $t_2$ ermittelt wird und mit der ermittelten Phasendifferenz $\varphi_{pro}$ die Eigenfrequenz $f_{0i}$ der jeweiligen Eigenform des Resonanzmeßsystems 1 bestimmt wird, nämlich gemäß dem formelmäßigen Zusammenhang aus Gleichung Glg. 15. Dieses Verfahren über die Auswertung der Wechselanteile der Projektionskomponenten ($\mathrm{Re}\{y_i\}$, $\mathrm{Im}\{y_i\}$) ermöglicht also eine direkte Ermittlung der Eigenfrequenz und resultiert aus der breitbandigen Anregung des Resonanzmeßsystems 1 durch das Prozeßrauschen, das in dem vorgestellten Modell als weißes Rauschen modelliert ist. Da das Resonanzmeßsystem 1 bzw. die Schwingelemente 2a, 2b das Verhalten eines Bandpasses mit Durchlaß im Bereich der Resonanzfrequenz aufweist bzw. aufweisen, kann über dem gesamten Frequenzbereich schnell und direkt der Wert der vorliegenden Eigenfrequenz $f_{0i}$ des Resonanzmeßsystems 1 ermittelt werden. Der erste Regelkreis 5 ist demzufolge als Frequenzregelkreis ausgestaltet.

Eine andere Ausgestaltung der Auswerteeinheit 8 sieht vor, daß der Frequenzregelkreis die durch Glg. 16 gegebene Regeldifferenz zu Null regelt und dabei mit einer näherungsweisen Ermittlung der Phasendifferenz arbeitet. Im eingeregelten Zustand ist der anfänglich in Kauf genommene Fehler der Regelung aufgrund der zu Null geregelten Regeldifferenz ebenfalls Null.

Bei der Auswerteeinheit 8 gemäß Fig. 3 ist ferner vorgesehen, daß durch Tiefpaßfilterung der Projektionskomponenten ($\mathrm{Re}\{y_i\}$, $\mathrm{Im}\{y_i\}$) des Antwortsignals $y_i(t)$ jeweils ein Gleichanteil der Projektionskomponenten ($\mathrm{Re}\{y_i\}$, $\mathrm{Im}\{y_i\}$) gewonnen wird, die Phasendifferenz $\varphi_i$ des Antwortsignals $y_i(t)$ durch die Gleichanteile der Projektionskomponenten ($\mathrm{Re}\{y_i\}$, $\mathrm{Im}\{y_i\}$) gewonnen wird und die Phasendifferenz $\varphi_i$ über die Anregungsfrequenz $f_i$ durch den als Phasenregelkreis ausgestalteten zweiten Regelkreis 6 zu Null geregelt wird, womit zwangsläufig die Anregungsfrequenz $f_i$ der Eigenfrequenz $f_{0i}$ des Resonanzmeßsystems 1 entspricht. Der zweite Regelkreis 6 arbeitet parallel zu dem ersten Regelkreis 5.

Wie in Fig. 3 zu erkennen ist, ist ein dritter Regelkreis 10 vorgesehen, der die Amplitude der Schwingung des Schwingelements 2a, 2b auf einen vorgegebenen Wert regelt, so daß die Schwingung immer eine ausreichende Stärke zur Erzielung der gewünschten Effekte aufweist. Durch die Regelung wird gleichzeitig verhindert, daß das Resonanzmeßsystem 1 bzw. die Schwingelemente 2a, 2b übersteuert werden, womit beispielsweise der Schädigung der als Coriolis-Meßrohre ausgestalteten Schwingelemente 2a, 2b vorgebeugt wird.

Die in Fig. 3 dargestellten Regler 9a, 9b, 9c können nach beliebigen geeignet erscheinenden Verfahren ausgestaltet sein, es kann sich um klassische Regler handeln, Zustandsregler oder sonstige Regler.

Im Gegensatz zu dem ersten Regelkreis 5, in dem die Frequenzregelung umgesetzt ist, beruht die Phasenregelung des zweiten Regelkreises 6 auf der Auswertung der Gleichanteile der Projektionskomponenten ($Re\{y_i\}$, $Im\{y_i\}$) des Antwortsignals $y_i(t)$, wobei eine gute Empfindlichkeit des Verfahrens nur im Resonanzbereich des Resonanzmeßsystems 1 vorliegt. Der hier realisierten Auswertung liegt die Erkenntnis zugrunde, daß das Antwortsignal $y_i(t)$ gegenüber dem bekannten Anregungssignal $F_i(t)$ phasenverschoben ist, wobei die Phasenverschiebung von dem Frequenzabstand des Anregungssignals $F_i(t)$ zu der Eigenfrequenz $f_{0i}$ des Resonanzmeßsystems 1 abhängt; dies ist bekannt von dem Übertragungsverhalten schwingfähiger Systeme, also von Systemen mindestens zweiter Ordnung. Um die Resonanzfrequenz $f_{0i}$ des Resonanzmeßsystems 1 zu finden, wird das Resonanzmeßsystem 1 monofrequent angeregt, wobei jede Frequenz eine gewisse Zeit auf das Resonanzmeßsystem Anwendung finden muß, damit sich ein quasistationärer Zustand einstellt. Die Änderungsgeschwindigkeit der Frequenz darf eine obere Grenze nicht überschreiten, da andernfalls die Phasenmessung verfälscht wird.

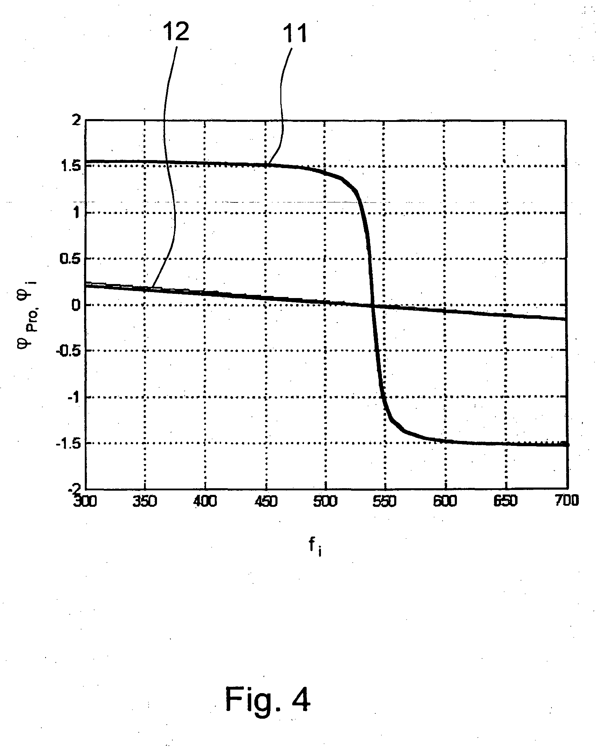

Bezogen auf die sich ändernde Anregungsfrequenz weist ein schwingfähiges System - wie das Resonanzmeßsystem 1 - eine große Änderung der Phasendifferenz nur im Resonanzbereich auf, was in Fig. 4 dargestellt ist. Hier zeigt Kurve 11 die Phasendifferenz zwischen Anregungssignal $F_i(t)$ und Antwortsignal $y_i(t)$ über der Anregungsfrequenz $f_i$ und Kurvenverlauf 12 dokumentiert die gleichbleibende Empfindlichkeit über den gesamten Frequenzbereich bei Auswertung der Wechselanteile der Projektionskomponenten ($Re\{y_i\}$, $Im\{y_i\}$) des Antwortsignals $y_i(t)$. In dem Resonanzmeßsystem 1 gemäß Fig. 3 ist daher vorgesehen, daß bei der Erzeugung des Anregungssignals $F_i(t)$ derjenige Regelkreis 5, 6 maßgebend ist, der in dem jeweiligen Frequenzbereich die größere Empfindlichkeit aufweist. Das bedeutet, daß der erste Regelkreis 5 außerhalb des Resonanzbereichs des Resonanzmeßsystems 1 maßgebend ist und der zweite Regelkreis 6 innerhalb des Resonanzbereichs des Resonanzmeßsystems 1 maßgebend ist. Dies geschieht hier dadurch, daß durch den Signalgenerator 7 die Stellgrößen des ersten Regelkreises 5 und des zweiten Regelkreises 6 fusioniert werden, im vorliegenden Fall durch Bildung des Summensignals aus den Stellgrößen. Die Amplitude kann dann zusätzlich und unabhängig von der Frequenzinformation eingestellt werden.

**Patentansprüche**

1. Verfahren zum Betreiben eines Resonanzmeßsystems (1) insbesondere eines Coriolis-Massedurchflußmeßgerätes, durch Bestimmung der Eigenfrequenzen des Resonanzmeßsystems und Einstellen und Nachverfolgen des Arbeitspunktes, wobei das Resonanzmeßsystem (1) wenigstens ein mit einem Prozeß wechselwirkendes Schwingelement (2a, 2b), wenigstens einen Schwingungserzeuger (3a, 3b, 3c) und wenigstens einen Schwingungsaufnehmer (4a, 4b, 4c) umfaßt, wobei das Schwingelement (2a, 2b) durch den Schwingungserzeuger (3a, 3b, 3c) mit bekannten Anregungssignalen $F_i(t)$ zu Schwingungen in wenigstens einer Eigenform angeregt wird und das Schwingelement (2a, 2b) durch den Prozeß mit unbekannten Anregungssignalen $W(t)$, nämlich durch das Rauschen des Prozesses, zu Schwingungen angeregt wird und die Schwingungen des Schwingelements (2a, 2b) durch den Schwingungsaufnehmer (4a, 4b, 4c) erfaßt und als wenigstens ein Antwortsignal $y_i(t)$ der jeweiligen Eigenform dargestellt werden,
**dadurch gekennzeichnet,**
**daß** durch Projektion des Antwortsignals $y_i(t)$ auf ein orthogonales Bezugssystem orthogonale Projektionskomponenten ($Re\{y_i\}$, $Im\{y_i\}$) des Antwortsignals $y_i(t)$ erzeugt werden, wobei als orthogonales Bezugssystem zwei um 90° verschobene harmonische Schwingungen verwendet werden und eine der harmonischen Schwingungen aus dem bekannten Anregungssignal $F_i(t)$ der jeweiligen Eigenform abgeleitet wird, mit wenigstens einem Teil der Wechselanteile der Projektionskomponenten ($Re\{y_i\}$, $Im\{y_i\}$) wenigstens ein erster mit der Eigenfrequenz $f_{0i}$ des Resonanzmeßsystems (1) korrespondierender Wert ermittelt wird und mit wenigstens einem Teil der Gleichanteile der Projektionskomponenten ($Re\{y_i\}$, $Im\{y_i\}$) wenigstens ein zweiter mit der Eigenfrequenz $f_{0i}$ des Resonanzmeßsystems (1) korrespondierender Wert ermittelt wird und der erste und der zweite mit der Eigenfrequenz $f_{0i}$ des Resonanzmeßsystems (1) korrespondierende Wert zur Anregung des Resonanzmeßsystems (1) mit mindestens einer Regelung in mindestens einem Regelkreis auf die mit der Eigenfrequenz $f_{0i}$ korrespondierende Eigenform verwendet werden.

2. Verfahren nach Anspruch 1, **dadurch gekennzeichnet, daß** der erste mit der Eigenfrequenz $f_{0i}$ korrespondierende ermittelte Wert zur Anregung des Resonanzmeßsystems (1) mit einer ersten Regelung in einem ersten Regelkreis (5) auf die korrespondierende Eigenform verwendet wird und der zweite mit der Eigenfrequenz $f_{0i}$ korrespondierende ermittelte Wert zur Anregung des Resonanzmeßsystems (1) mit einer zweiten Regelung in einem zweiten Regelkreis (6) auf die korrespondierende Eigenform verwendet wird oder daß die Regelung als Mehrgrößenregelung realisiert ist.

**3.** Verfahren nach Anspruch 2, **dadurch gekennzeichnet, daß** die erste Regelung und die zweite Regelung konkurrierend und/oder komplementär eingesetzt werden, so daß die in dem Wert für die Eigenfrequenz $f_{0i}$ enthaltenen Prozeßgrößen ermittelt werden und/oder das Resonanzmeßsystem (1) in den durch den ermittelten Wert für die Eigenfrequenz $f_{0i}$ gegebenen Arbeitspunkt gerührt wird.

**4.** Verfahren nach einem der Ansprüche 1 bis 3, **dadurch gekennzeichnet, daß** der Wert für die Eigenfrequenz $f_{0i}$ der jeweiligen Eigenform des Resonanzmeßsystems (1) ermittelt wird, insbesondere im ausgeregelten Zustand des Resonanzmeßsystems (1) aus einer Stellgröße des Resonanzmeßsystems (1), insbesondere aus einer fusionierten Stellgröße.

**5.** Verfahren nach einem der Ansprüche 1 bis 4, **dadurch gekennzeichnet, daß** die Werte der Eigenfrequenzen $f_{0i}$ der jeweiligen Eigenform modellbasiert aus den Projektionskomponenten ($\text{Re}\{y_i\}$, $\text{Im}\{y_i\}$) des Antwortsignals $y_i(t)$ ermittelt werden.

**6.** Verfahren nach Anspruch 5, **dadurch gekennzeichnet, daß** als Modell der jeweiligen Eigenform des Schwingelements (2a, 2b) eine lineare Differentialgleichung zweiter Ordnung verwendet wird, insbesondere wobei als bekanntes Anregungssignal $F_i(t)$ der jeweiligen Eigenform eine harmonische Schwingung mit einer Anregungsfrequenz $f_i$ verwendet wird, insbesondere wobei das unbekannte Anregungssignal $W(t)$ als weißes Rauschen angenommen wird, insbesondere wobei vereinfachend als Modell für das Antwortsignal $y_i(t)$ der jeweiligen Eigenform als Geschwindigkeitssignal der Schwingung folgender Zusammenhang verwendet wird:

$$y_i(t) = A_i \sin(\omega_i t + \varphi_i) + B_i \cdot e^{-\omega_{0i} D_i t} \cdot \sin(\omega_{0i} t) + B_{iPr o} \sin(\omega_{0i} t).$$

**7.** Verfahren nach einem der Ansprüche 1 bis 6, **dadurch gekennzeichnet, daß** als orthogonales Bezugssystem der jeweiligen Eigenform zwei um 90° verschobene harmonische Schwingungen verwendet werden, mit denen das Antwortsignal $y_i(t)$ zum Erhalt der orthogonalen Projektionskomponenten ($\text{Re}\{y_i\}$, $\text{Im}\{yi\}$) multipliziert wird, insbesondere wobei eine der harmonischen Schwingungen das bekannte Anregungssignal $F_i(t)$ ist, insbesondere wobei die Projektionskomponenten ($\text{Re}\{y_i\}$, $\text{Im}\{y_i\}$) beschreibbar sind durch:

$$y_i(t)\sin(\omega_i t) = \text{Re}\{y_i\}$$
$$= \frac{A_i}{2}\left[\cos(\varphi_i) - \cos(2\omega_i t + \varphi_i)\right] + \frac{(B_i e^{-\omega_{0i} D_i t} + B_{iPr o})}{2}\left[\cos(\omega_{0i} - \omega_i)t - \cos(\omega_{0i} + \omega_i)t\right]$$

$$y_i(t)\cos(\omega_i t) = \text{Im}\{y_i\}$$
$$= \frac{A_i}{2}\left[\sin(\varphi_i) + \sin(2\omega_i t + \varphi_i)\right] + \frac{(B_i e^{-\omega_{0i} D_i t} + B_{iPr o})}{2}\left[\sin(\omega_{0i} - \omega_i)t + \sin(\omega_{0i} + \omega_i)t\right].$$

**8.** Verfahren nach einem der Ansprüche 1 bis 7, **dadurch gekennzeichnet, daß** durch Hochpaßfilterung und/oder Tiefpaßfilterung der Projektionskomponenten ($\text{Re}\{y_i\}$, $\text{Im}\{yi\}$) des Antwortsignals $y_i(t)$ jeweils ein Wechselanteile der Projektionskomponenten ($\text{Re}\{y_i\}$, $\text{Im}\{y_i\}$) gewonnen wird, die Phasendifferenz $\varphi_{Pr\,oi}$ des durch die Wechselanteile der Projektionskomponenten ($\text{Re}\{y_i\}$, $\text{Im}\{y_i\}$) beschriebenen Zeigers (S) zwischen wenigstens zwei Zeitpunkten $t_1$, $t_2$ ermittelt wird und mit der ermittelten Phasendifferenz $\varphi_{Pr\,oi}$ die Eigenfrequenz $f_{0i}$ des Resonanzmeßsystems (1) bestimmt wird, insbesondere gemäß:

$$f_{0i} = f_i + \frac{1}{2\pi(t_1 - t_2)}\arctan\left(\frac{\text{Im}\{y_{iw}(t_1)\} \cdot \text{Re}\{y_{iw}(t_2)\} - \text{Re}\{y_{iw}(t_1)\} \cdot \text{Im}\{y_{iw}(t_2)\}}{\text{Re}\{y_{iw}(t_1)\} \cdot \text{Re}\{y_{iw}(t_2)\} + \text{Im}\{y_{iw}(t_1)\} \cdot \text{Im}\{y_{iw}(t_2)\}}\right).$$

**9.** Verfahren nach einem der Ansprüche 1 bis 8, **dadurch gekennzeichnet, daß** der erste Regelkreis (5) als Frequenzregelkreis ausgestaltet ist und die Regeldifferenz

$$f_{0i} = f_i + \frac{1}{2\pi(t_1 - t_2)} \arctan\left(\frac{\text{Im}\{y_{iw}(t_1)\} \cdot \text{Re}\{y_{iw}(t_2)\} - \text{Re}\{y_{iw}(t_1)\} \cdot \text{Im}\{y_{iw}(t_2)\}}{\text{Re}\{y_{iw}(t_1)\} \cdot \text{Re}\{y_{iw}(t_2)\} + \text{Im}\{y_{iw}(t_1)\} \cdot \text{Im}\{y_{iw}(t_2)\}}\right)$$

zu Null regelt oder unter Verwendung der Näherung arctan(x) = x die folgende Regeldifferenz

$$f_{0i} - f_i = \frac{1}{2\pi(t_1 - t_2)} \cdot \frac{\text{Im}\{y_{iw}(t_1)\} \cdot \text{Re}\{y_{iw}(t_2)\} - \text{Re}\{y_{iw}(t_1)\} \cdot \text{Im}\{y_{iw}(t_2)\}}{\text{Re}\{y_{iw}(t_1)\} \cdot \text{Re}\{y_{iw}(t_2)\} + \text{Im}\{y_{iw}(t_1)\} \cdot \text{Im}\{y_{iw}(t_2)\}} \cdot$$

zu Null regelt.

**10.** Verfahren nach einem der Ansprüche 1 bis 9, **dadurch gekennzeichnet, daß** durch Tiefpaßfilterung der Projektionskomponenten ($\text{Re}\{y_i\}$, $\text{Im}\{y_i\}$) des Antwortsignals $y_i(t)$ jeweils ein Gleichanteil der Projektionskomponenten ($\text{Re}\{y_i\}$, $\text{Im}\{y_i\}$) gewonnen wird, die Phasendifferenz $\varphi$, des Antwortsignals $y_i(t)$ durch die Gleichanteile der Projektionskomponenten ($\text{Re}\{y_i\}$, $\text{Im}\{y_i\}$) gewonnen wird und die Phasendifferenz $\varphi_i$ über die Anregungsfrequenz $f_i$ durch den als Phasenregelkreis ausgestalteten zweiten Regelkreis (6) zu Null geregelt wird, womit die Anregungsfrequenz $f_i$ der Eigenfrequenz $f_{0i}$ des Resonanzmeßsystems (1) entspricht.

**11.** Verfahren nach einem der Ansprüche 1 bis 9, **dadurch gekennzeichnet, daß** durch Tiefpaßfilterung der Projektionskomponenten ($\text{Re}\{y_i\}$, $\text{Im}\{y_i\}$) des Antwortsignals $y_i(t)$ jeweils ein Gleichanteil der Projektionskomponenten ($\text{Re}\{y_i\}$, $\text{Im}\{y_i\}$) gewonnen wird, die Phasendifferenz $\varphi_i$ des Antwortsignals $y_i(t)$ durch die Gleichanteile der Projektionskomponenten ($\text{Re}\{y_i\}$, $\text{Im}\{y_i\}$) gewonnen wird und aus der Phasenverschiebung $\varphi_i$ ein Wert der Eigenfrequenz $f_{0i}$ des Resonanzmeßsystems (1) erhalten wird, insbesondere aus den Zusammenhängen

$$\text{Re}\{y_{iG}\} = \frac{A_i}{2}\cos\varphi_i \quad \text{und} \quad \text{Im}\{y_{iG}\} = \frac{A_i}{2}\sin\varphi_i,$$

$$\varphi_i = \arctan\left(\frac{\text{Im}\{y_{iG}\}}{\text{Re}\{y_{iG}\}}\right) = \frac{\pi}{2} - \arctan\left(\frac{2\omega_{0i}D_i\omega_i}{\omega_{0i}^2 - \omega_i^2}\right).$$

**12.** Verfahren nach einem der Ansprüche 2 bis 11, **dadurch gekennzeichnet, daß** das bei der Erzeugung des Anregungssignals $F_i(t)$ derjenige Regelkreis (5, 6) maßgebend ist, der in dem jeweiligen Frequenzbereich die größere Empfindlichkeit aufweist, insbesondere der erste Regelkreis (5) außerhalb des Resonanzbereichs des Resonanzmeßsystems (1) maßgebend ist und der zweite Regelkreis (6) innerhalb des Resonanzbereichs (1) des Resonanzmeßsystems maßgebend ist, vorzugsweise durch einen Signalgenerator (7) die Stellgrößen des ersten Regelkreises (5) und des zweiten Regelkreises (6) fusioniert werden, insbesondere durch verschiedene Funktionen fusioniert werden, vorzugsweise durch Bildung eines Summensignals aus den Stellgrößen.

**13.** Verfahren nach einem der Ansprüche 2 bis 12, **dadurch gekennzeichnet, daß** durch einen dritten Regelkreis (10) die Amplitude der Schwingung des Schwingelements (2a, 2b) auf einen vorgegebenen Wert geregelt wird.

**14.** Verfahren nach einem der Ansprüche 1 bis 13, **dadurch gekennzeichnet, daß** zur Regelung des Resonanzmeßsystems (1) auf jede verschiedene Eigenform ein separater Regelkreis vorgesehen ist, insbesondere separat ein erster Regelkreis und ein zweiter Regelkreis, insbesondere auch ein dritter Regelkreis verwendet werden oder ein separater Regelkreis mit einer Mehrgrößenregelung verwendet wird.

15. Resonanzmeßsystem, insbesondere ein Coriolis-Massedurchflußmeßgerät, wobei das Resonanzmeßsystem (1) wenigstens ein mit einem Prozeß wechselwirkendes Schwingelement (2a, 2b), wenigstens einen Schwingungserzeuger (3a, 3b, 3c) und wenigstens einen Schwingungsaufriehmer (4a, 4b, 4c) umfaßt, wobei das Schwingelement (2a, 2b) durch den Schwingungserzeuger (3a, 3b, 3c) mit bekannten Anregungssignalen $F_i(t)$ zu Schwingungen in wenigstens einer Eigenform anregbar ist und das Schwingelement (2a, 2b) durch den Prozeß mit unbekannten Anregungssignalen W(t) zu Schwingungen anregbar ist und die Schwingungen des Schwingelements (2a, 2b) durch den Schwingungsaufnehmer (4a, 4b, 4c) erfaßbar und als wenigstens ein Antwortsignal $y_i(t)$ darstellbar sind,
**dadurch gekennzeichnet,**
**daß** das Resonanzmeßsystem mit einem Verfahren nach einem der Ansprüche 1 bis 14 betrieben wird.

**Claims**

1. Method for operating a resonance-measuring system (1), in particular a Coriolis mass flowmeter, by determining the eigenfrequencies of the resonance-measuring system and regulating and tracking the working point, wherein the resonance-measuring system (1) is comprised of at least one oscillation element (2a, 2b) interactive with a process, at least one oscillation driver (3a, 3b, 3c) and at least one oscillation sensor (4a, 4b, 4c), wherein the oscillation element (2a, 2b) is excited to oscillation in at least one eigenform with known excitation signals $F_i(t)$ by the oscillation driver (3a, 3b, 3c) and the oscillation element (2a, 2b) is excited to oscillation with unknown excitation signals W(t) by the process and the oscillations of the oscillation element (2a, 2b) are detected by the oscillation sensor (4a, 4b, 4c) and are formed as at least one response signal $y_i(t)$ of the respective eigenform
**characterized in**
**that** orthogonal projection components (Re$\{y_i\}$,Im$\{y_i\}$) of the response signal are created by projecting the response signal $y_i(t)$ onto an orthogonal frame of reference, wherein two harmonic oscillations shifted by 90° are used as an orthogonal frame of reference and one of the harmonic oscillations is derived from the known excitation signal $F_i(t)$ of the respective eigenform, at least a first value correspondent with the eigenfrequency $f_{0i}$ of the resonance-measuring system (1) is determined with at least a part of the alternating components of the projection components (Re$\{y_i\}$,Im$\{y_i\}$), at least a second value correspondent with the eigenfrequency $f_{0i}$ of the resonance-measuring system (1) is determined with at least a part of the constant components of the projection components (Re$\{y_i\}$,Im$\{y_i\}$) and the first and the second value correspondent with the eigenfrequency $f_{0i}$ of the resonance-measuring system (1) are used for exciting the resonance-measuring system (1) with at least one control in at least one control loop in the eigenform correspondent with the eigenfrequency $f_{0i}$.

2. Method according to claim 1, **characterized in that** the first determined value correspondent with the eigenfrequency $f_{0i}$ is used for exciting the resonance-measuring system (1) with a first control in a first control loop (5) in the correspondent eigenform and the second determined value correspondent with the eigenfrequency $f_{0i}$ is used for exciting the resonance-measuring system (1) with a second control in a second control loop (6) in the correspondent eigenform or that the control is realized as a multivariable control.

3. Method according to claim 2, **characterized in that** the first control and the second control are employed competitively and/or complementarily so that the process variables contained in the value for the eigenfrequency $f_{0i}$ are determined and/or the resonance-measuring system (1) led to the working point given by the value determined for the eigenfrequency $f_{0i}$.

4. Method according to any one of claims 1 to 3, **characterized in that** the value for the eigenfrequency of the respective eigenform of the resonance-measuring system (1) is determined, in particular in the adjusted state of the resonance-measuring system (1) from a correcting variable of the resonance-measuring system (1), in particular from a merged correcting variable.

5. Method according to any one of claims 1 to 4, **characterized in that** the value of the eigenfrequency $f_{0i}$ of the respective eigenform is determined based on a model from the projection components (Re$\{y_i\}$,Im$\{y_i\}$) of the response signal $y_i(t)$.

6. Method according to claim 5, **characterized in that** a second order linear differential equation is used as a model of the respective eigenform of the oscillation element (2a, 2b), in particular wherein a harmonic oscillation with an excitation frequency $f_i$ is used as a known excitation signal $F_i(t)$ of the respective eigenform, in particular wherein the unknown excitation signal W(t) is assumed to be white noise, in particular wherein, simplified as a model for the response signal $y_i(t)$ of the respective eigenform, the following relation is used as a speed signal of the oscillation:

$$y_i(t) = A_i \sin(\omega_i t + \varphi_i) + B_i \cdot e^{-\omega_{0i} D_i t} \cdot \sin(\omega_{0i} t) + B_{i\mathrm{Pr}o} \sin(\omega_{0i} t)$$

7. Method according to any one of claims 1 to 6, **characterized in that** two harmonic oscillations shifted by 90° are used as an orthogonal frame of reference of the respective eigenform with which the response signal $y_i$(t) is multiplied for obtaining the orthogonal projection components (Re{$y_i$},Im{$y_i$}), in particular wherein one of the harmonic oscillations is the known excitation signal F$_i$(t), in particular wherein the projection components (Re{$y_i$},Im{$y_i$}) can be described by:

$$y_i(t)\sin(\omega_i t) = \mathrm{Re}\{y_i\}$$
$$= \frac{A_i}{2}\left[\cos(\varphi_i) - \cos(2\omega_i t + \varphi_i)\right] + \frac{\left(B_i e^{-\omega_{0i} D_i t} + B_{i\mathrm{Pr}o}\right)}{2}\left[\cos(\omega_{0i} - \omega_i)t - \cos(\omega_{0i} + \omega_i)t\right]$$

$$y_i(t)\cos(\omega_i t) = \mathrm{Im}\{y_i\}$$
$$= \frac{A_i}{2}\left[\sin(\varphi_i) + \sin(2\omega_i t + \varphi_i)\right] + \frac{\left(B_i e^{-\omega_{0i} D_i t} + B_{i\mathrm{Pr}o}\right)}{2}\left[\sin(\omega_{0i} - \omega_i)t + \sin(\omega_{0i} + \omega_i)t\right]$$

8. Method according to any one of claims 1 to 7, **characterized in that** respectively an alternating component of the projection components ( Re{$y_i$},Im{$y_i$}) is obtained by high-pass filtering and/or low-pass filtering of the projection components (Re{$y_i$},Im{$y_i$}) of the response signal $y_i$(t), the phase difference $\phi_{\mathrm{Pro}i}$ of the pointer (S) described by the alternating components of the projection components (Re{$y_i$},Im{$y_i$}) is determined between at least two time terms $t_1$, $t_2$ and the eigenfrequency $f_{0i}$ of the resonance-measuring system (1) is defined with the determined phase difference $\phi_{\mathrm{Pro}i}$, in particular in accordance with:

$$f_{0i} = f_i + \frac{1}{2\pi(t_1 - t_2)}\arctan\left(\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}\right)$$

9. Method according to any one of claims 1 to 8, **characterized in that** the first control loop (5) is formed as a frequency control loop and the control deviation

$$f_{0i} = f_i + \frac{1}{2\pi(t_1 - t_2)}\arctan\left(\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}\right)$$

is nullified or, using the approximation arctan(x)=x, the following control deviation

$$f_{0i} - f_i = \frac{1}{2\pi(t_1 - t_2)}\cdot\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}$$

is nullified.

10. Method according to any one of claims 1 to 9, **characterized in that** a respective constant component of the projection components ($\mathrm{Re}\{y_i\}$,$\mathrm{Im}\{y_i\}$) is obtained by low-pass filtering of the projection components ($\mathrm{Re}\{y_i\}$,$\mathrm{Im}\{y_i\}$) of the response signal $y_i(t)$, the phase difference $\phi$ of the response signal $y_i(t)$ is obtained through the constant components of the projection components( $\mathrm{Re}\{y_i\}$,$\mathrm{Im}\{y_i\}$) and the phase difference $\phi$ is nullified via the excitation frequency $f_i$ by the second control loop (6) designed as phase control loop, so that the excitation frequency $f_i$ is the eigenfrequency $f_{0i}$ of the resonance-measuring system (1).

11. Method according to any one of claims 1 to 9, **characterized in that** a respective constant component of the projection components ($\mathrm{Re}\{y_i\}$,$\mathrm{Im}\{y_i\}$) is obtained by low-pass filtering of the projection components ($\mathrm{Re}\{y_i\}$,$\mathrm{Im}\{y_i\}$) of the response signal $y_i(t)$, the phase difference $\phi_P$ of the response signal is obtained through the constant component of the projection components ( $\mathrm{Re}\{y_i\}$,$\mathrm{Im}\{y_i\}$) and a value of the eigenfrequency $f_{0i}$ of the resonance-measuring system (1) is obtained from the phase shift $\phi_i$, in particular from the relations

$$\mathrm{Re}\{y_{iG}\} = \frac{A_i}{2}\cos\varphi_i \text{ and } \mathrm{Im}\{y_{iG}\} = \frac{A_i}{2}\sin\varphi_i,$$

$$\varphi_i = \arctan\left(\frac{\mathrm{Im}\{y_{iG}\}}{\mathrm{Re}\{yiG\}}\right) = \frac{\pi}{2} - \arctan\left(\frac{2\omega_{0i}D_i\omega_i}{\omega_{0i}^2 - \omega_i^2}\right)$$

12. Method according to any one of claims 2 to 11, **characterized in that**, by the generation of the excitation signal $F_i(t)$, the control loop (5, 6) that has a greater sensitivity in the respective frequency range is decisive, in particular, the first control loop (5) is decisive outside of the resonance range of the resonance-measuring system (1) and the second control loop (6) is decisive inside of the resonance range of the resonance-measuring system (1), preferably the correcting variables of the first control loop (5) and the second control loop (6) are combined by a signal generator (7), in particular are combined by different functions, preferably by creating a summation signal from the correcting variables.

13. Method according to any one of claims 2 to 12, **characterized in that** the amplitude of the oscillation of the oscillation elements (2a, 2b) are adjusted at a given value by a third control loop (10).

14. Method according to any one of claims 1 to 13, **characterized in that**, for controlling the resonance-measuring system (1), a separate control loop is provided for each individual eigenform, in particular a first control loop and a second control loop are used separately, in particular a third control loop is also used or a separate control loop is used using multivariable control.

15. Resonance-measuring system, in particular a Coriolis mass flowmeter, wherein the resonance-measuring system (1) includes at least one oscillation element (2a, 2b) interactive with a process, at least one oscillation driver (3a, 3b, 3c) and at least one oscillation sensor (4a, 4b, 4c), wherein the oscillation element (2a, 2b) can be excited to oscillation in at least one eigenform with known excitation signals $F_i(t)$ by the oscillation driver (3a, 3b, 3c) and the oscillation element (2a, 2b) can be excited to oscillation with unknown excitation signals W(t) by the process and the oscillations of the oscillation element (2a, 2b) can be detected by the oscillation sensor (4a, 4b, 4c) and can be formed as at least one response signal $y_i(t)$ of the respective eigenform
**characterized in**
**that** the resonance-measuring system (1) is operated with a method according to any one of claims 1 to 14.

**Revendications**

1. Procédé de mise en fonctionnement d'un système de mesure à résonance (1), notamment d'un appareil de mesure de débit massique de type Coriolis, par détermination des fréquences propres du système de mesure à résonance et réglage et suivi du point de fonctionnement, dans lequel le système de mesure à résonance (1) comprend au moins un élément oscillant (2a, 2b) interagissant avec un processus, au moins un générateur d'oscillation (3a, 3b, 3c) et au moins un dispositif d'acquisition d'oscillations (4a, 4b, 4c), dans lequel l'élément oscillant (2a, 2b) est excité par le générateur d'oscillation (3a, 3b, 3c) au moyen de signaux d'excitation connus $F_i(t)$ de manière à produire des oscillations dans au moins un mode propre et l'élément oscillant (2a, 2b) est excité de manière à produire des oscillations par le processus au moyen de signaux d'excitation inconnus W(t), à savoir par le bruit du processus et les oscillations de l'élément oscillant (2a, 2b) sont détectées par le dispositif d'acquisition d'oscillations (4a, 4b, 4c) et sont représentés sous la forme d'au moins un signal de réponse $y_i(t)$ du mode propre respectif,

**caractérisé en ce que**

des composantes de projection orthogonales ($Re\{y_i\}$, $Im\{y_i\}$) du signal de réponse $y_i(t)$ sont générées par projection du signal de réponse $y_i(t)$ sur un repère orthogonal, dans lequel on utilise en tant que repère orthogonal deux oscillations harmoniques décalées de 90° et **en ce que** l'une des oscillations harmoniques est dérivée du signal d'excitation connu $F_i(t)$ du mode propre respectif, **en ce qu'**une première valeur correspondant à la fréquence propre $f_{0i}$ du système de mesure à résonance (1) est déterminée au moyen d'au moins une partie des composantes alternatives des composantes de projection ($Re\{y_i\}$, $Im\{y_i\}$) et **en ce qu'**au moins une deuxième valeur correspondant à la fréquence propre $f_{0i}$ du système de mesure à résonance (1) est déterminée au moyen d'au moins une partie des composantes continues des composantes de projection ($Re\{y_i\}$, $Im\{y_i\}$) et **en ce que** les première et deuxième valeurs correspondant à la fréquence propre $f_{0i}$ du système de mesure à résonance (1) sont utilisées pour exciter le système de mesure à résonance (1) au moyen d'au moins une unité de commande se trouvant dans au moins un circuit de commande dans le mode propre correspondant à la fréquence propre $f_{0i}$.

2. Procédé selon la revendication 1, **caractérisé en ce que** la première valeur déterminée correspondant à la fréquence propre $f_{0i}$ est utilisée pour exciter le système de mesure à résonance (1) au moyen d'une première unité de commande se trouvant dans un premier circuit de commande (5) dans le mode propre correspondant et **en ce que** la deuxième valeur déterminée correspondant à la fréquence propre $f_{0i}$ est utilisée pour exciter le système de mesure à résonance (1) au moyen d'une deuxième unité de commande se trouvant dans un deuxième circuit de commande (6) dans le mode propre correspondant ou **en ce que** l'unité de commande est réalisée sous la forme d'une unité de commande à variables multiples.

3. Procédé selon la revendication 2, **caractérisé en ce que** la première unité de commande et la deuxième unité de commande sont mises en oeuvre de manière simultanée et/ou complémentaire afin d'obtenir les grandeurs de processus contenues dans la valeur correspondant à la fréquence propre $f_{0i}$ et/ou d'amener le système de mesure à résonance (1) au point de fonctionnement défini par la valeur déterminée pour la fréquence propre $f_{0i}$.

4. Procédé selon l'une quelconque des revendications 1 à 3, **caractérisé en ce que** la valeur correspondant à la fréquence propre $f_{0i}$ du mode propre respectif du système de mesure à résonance (1) est obtenue, notamment à l'état stable du système de mesure à résonance (1), à partir d'une grandeur de réglage du système de mesure à résonance (1), notamment à partir d'une grandeur de réglage fusionnée.

5. Procédé selon l'une quelconque des revendications 1 à 4, **caractérisé en ce que** les valeurs des fréquences propres $f_{0i}$ du mode propre respectif sont basées sur des modèles et sont déterminées à partir des composantes de projection ($Re\{y_i\}$, $Im\{y_i\}$) du signal de réponse $y_i(t)$.

6. Procédé selon la revendication 5, **caractérisé en ce que** l'on utilise en tant que modèle du mode propre respectif de l'élément oscillant (2a, 2b) une équation différentielle linéaire du deuxième ordre, et plus particulièrement, et plus particulièrement, dans lequel on utilise en tant que signal d'excitation connu $F_i(t)$ du mode propre respectif une oscillation harmonique ayant une fréquence d'excitation $f_i$, et plus particulièrement, dans lequel le signal d'excitation inconnu W(t) est supposé être un bruit blanc, et plus particulièrement, dans lequel on utilise, à des fins de simplification en tant que modèle du signal de réponse $y_i(t)$ du mode propre respectif en tant que signal de vitesse de l'oscillation, la relation suivante :

$$y_i(t) = A_i \sin(\omega_i t + \varphi_i) + B_i \cdot e^{-\omega_{0i} D_i t} \cdot \sin(\omega_{0i} t) + B_{i\,\mathrm{Pr}\,o} \sin(\omega_{0i} t).$$

7. Procédé selon l'une quelconque des revendications 1 à 6, **caractérisé en ce qu'**on utilise en tant que repère orthogonal du mode propre respectif deux oscillations harmoniques décalées de 90° par lesquelles on multiplie le signal de réponse $y_i(t)$ pour obtenir les composantes de projection orthogonales ($Re\{y_i\}$, $Im\{y_i\}$), et plus particulièrement, dans lequel l'une des oscillations harmoniques est le signal d'excitation connu $F_i(t)$, et plus particulièrement, dans lequel les composantes de projection ($Re\{y_i\}$, $Im\{y_i\}$) peuvent être décrites par :

$$y_i(t)\sin(\omega_i t) = \mathrm{Re}\{y_i\}$$

$$= \frac{A_i}{2}\left[\cos(\varphi_i) - \cos(2\omega_i t + \varphi_i)\right] + \frac{(B_i e^{-\omega_{0i} D_i t} + B_{i\,\mathrm{Pr}\,o})}{2}\left[\cos(\omega_{0i} - \omega_i)t - \cos(\omega_{0i} + \omega_i)t\right]$$

$$y_i(t)\cos(\omega_i t) = \mathrm{Im}\{y_i\}$$

$$= \frac{A_i}{2}\left[\sin(\varphi_i) - \sin(2\omega_i t + \varphi_i)\right] + \frac{(B_i e^{-\omega_{0i} D_i t} + B_{i\,\mathrm{Pr}\,o})}{2}\left[\sin(\omega_{0i} - \omega_i)t - \sin(\omega_{0i} + \omega_i)t\right].$$

8. Procédé selon l'une quelconque des revendications 1 à 7, **caractérisé en ce qu'**une composante alternative respective des composantes de projection ($\mathrm{Re}\{y_i\}$, $\mathrm{Im}\{y_i\}$) est obtenue par filtrage passe-haut et/ou filtrage passe-bas des composantes de projection ($\mathrm{Re}\{y_i\}$, $\mathrm{Im}\{y_i\}$) du signal de réponse $y_i(t)$, la différence de phase $\varphi_{Pr0i}$ de l'indicatrice (S) décrite par les composantes alternatives des composantes de projection ($\mathrm{Re}\{y_i\}$, $\mathrm{Im}\{y_i\}$) est déterminée entre au moins deux instants $t_1$, $t_2$ et la fréquence propre $f_{0i}$ du système de mesure à résonance (1) est déterminée au moyen de la différence de phase déterminée $\varphi_{Pr0i}$, notamment conformément à :

$$f_{0i} = f_i + \frac{1}{2\pi(t_1 - t_2)}\arctan\left(\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}\right).$$

9. Procédé selon l'une quelconque des revendications 1 à 8, **caractérisé en ce que** le premier circuit de commande (5) est réalisé sous la forme d'un circuit de commande de fréquence et **en ce que** la différence de commande :

$$f_{0i} = f_i + \frac{1}{2\pi(t_1 - t_2)}\arctan\left(\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}\right)$$

est réglée à zéro ou **en ce que** la différence de commande suivante :

$$f_{0i} - f_i = \frac{1}{2\pi(t_1 - t_2)}\cdot\frac{\mathrm{Im}\{y_{iw}(t_1)\}\cdot\mathrm{Re}\{y_{iw}(t_2)\} - \mathrm{Re}\{y_{iw}(t_1)\}\cdot\mathrm{Im}\{y_{iw}(t_2)\}}{\mathrm{Re}\{y_{iw}(t_1)\}\cdot\mathrm{Re}\{y_{iw}(t_2)\} + \mathrm{Im}\{y_{iw}(t_1)\}\cdot\mathrm{Im}\{y_{iw}(t_2)\}}.$$

est réglée à zéro en utilisant l'approximation arctan $(x) = x$.

10. Procédé selon l'une quelconque des revendications 1 à 9, **caractérisé en ce qu'**une composante continue des composantes de projection ($\mathrm{Re}\{y_i\}$, $\mathrm{Im}\{y_i\}$) est respectivement obtenue par filtrage passe-bas des composantes de projection ($\mathrm{Re}\{y_i\}$, $\mathrm{Im}\{y_i\}$) du signal de réponse $y_i(t)$, **en ce que** la différence de phase $\varphi_i$ du signal de réponse $y_i(t)$ est obtenue au moyen de la composante continue des composantes de projection ($\mathrm{Re}\{y_i\}$, $\mathrm{Im}\{y_i\}$) et **en ce que** la différence de phase $\varphi_i$ est réglée à zéro par l'intermédiaire de la fréquence d'excitation $f_i$ par le deuxième circuit de commande (6) réalisé sous la forme d'un circuit de commande de phase, d'où il résulte que la fréquence d'excitation $f_i$ correspond à la fréquence propre $f_{0i}$ du système de mesure à résonance (1).

11. Procédé selon l'une quelconque des revendications 1 à 9, **caractérisé en ce qu'**une composante continue respective des composantes de projection ($\mathrm{Re}\{y_i\}$, $\mathrm{Im}\{y_i\}$) est obtenue par filtrage passe-bas des composantes de projection

(Re{y$_i$}, Im{y$_i$}) du signal de réponse y$_i$(t), **en ce que** la différence de phase $\varphi_i$ du signal de réponse y$_i$ (t) est obtenue au moyen des composantes continues des composantes de projection (Re{y$_i$}, Im{y$_i$}) et **en ce qu'**une valeur de la fréquence propre f$_{0i}$ du système de mesure à résonance (1) est obtenue à partir du déphasage $\varphi_i$, notamment à partir des relations suivantes :

$$\text{Re}\{y_{iG}\} = \frac{A_i}{2}\cos\varphi_i \quad \text{et} \quad \text{Im}\{y_{iG}\} = \frac{A_i}{2}\sin\varphi_i,$$

$$\varphi_i = \arctan\left(\frac{\text{Im}\{y_{iG}\}}{\text{Re}\{y_{iG}\}}\right) = \frac{\pi}{2} - \arctan\left(\frac{2\omega_{0i}D_i\omega_i}{\omega_{0i}^2 - \omega_i^2}\right).$$

12. Procédé selon l'une quelconque des revendications 2 à 11, **caractérisé en ce que**, lors de la génération du signal d'excitation F$_i$(t), le circuit de commande (5, 6) déterminant est celui qui présente la plus grande sensibilité dans le domaine de fréquence respectif, notamment le premier circuit de commande (5) se situant à l'extérieur du domaine de résonance du système de mesure à résonance (1) est déterminant et le deuxième circuit de commande (6) se trouvant à l'intérieur du domaine de résonance (1) du système de mesure à résonance est déterminant, et préférablement, les grandeurs de réglage du premier circuit de commande (5) et du deuxième circuit de commande (6) sont fusionnées au moyen d'un générateur de signal (7), et sont plus particulièrement fusionnées au moyen de diverses fonctions, de préférence en créant un signal de somme à partir des grandeurs de réglage.

13. Procédé selon l'une quelconque des revendications 2 à 12, caractérisé en ce l'amplitude de l'oscillation de l'élément oscillant (2a, 2b) est réglée à une valeur prédéterminée au moyen d'un troisième circuit de commande (10).

14. Procédé selon l'une quelconque des revendications 1 à 13, **caractérisé en ce que**, pour régler le système de mesure à résonance (1) sur chaque mode propre différent, il est prévu un circuit de commande séparé, notamment un premier circuit de commande et un second circuit de commande séparés, et plus particulièrement, un troisième circuit de commande ou un circuit de commande séparé comportant une unité de commande à variables multiples.

15. Système de mesure à résonance, notamment, appareil de mesure de débit massique de type Coriolis, dans lequel le système de mesure à résonance (1) comprend au moins un élément oscillant (2a, 2b) interagissant avec un processus, au moins un générateur d'oscillations (3a, 3b, 3c) et au moins un dispositif d'acquisition d'oscillations (4a, 4b, 4c), dans lequel l'élément oscillant (2a, 2b) peut être excité par l'intermédiaire des générateurs d'oscillations (3a, 3b, 3c) au moyen de signaux d'excitation connus F$_i$(t) pour produire des oscillations dans au moins un mode propre et en ce que l'élément oscillant (2a, 2b) peut être excité par l'intermédiaire du processus au moyen de signaux d'excitation inconnus W(t) afin de produire des oscillations et en ce que les oscillations de l'élément oscillant (2a, 2b) peuvent être détectées par les dispositifs d'acquisition d'oscillations (4a, 4b, 4c) et peuvent être représentées sous la forme d'au moins un signal de réponse y$_i$(t),
**caractérisé en ce que** le système de mesure à résonance est mis en fonctionnement au moyen d'un procédé selon l'une quelconque des revendications 1 à 14.

Fig. 1

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9831990 A
- US 20030140695 A
- US 20080141787 A